# EUROPEAN PATENT SPECIFICATION

(11) **EP 4 419 615 B1**
(45) Date of publication and mention of the grant of the patent: **25.11.2026**
(21) Application number: 22812878.1
(22) Date of filing: 21.10.2022
(51) Int. Cl.: C09K 5/04, C10M 171/00

(54) **COMPOSITIONS OF HFO-1234YF, HFC-32, HFC-152A, AND HYDROCARBONS AND SYSTEMS FOR USING THE COMPOSITIONS**
ZUSAMMENSETZUNGEN VON HFO-1234YF, HFC-32, HFC-152A UND KOHLENWASSERSTOFFE SOWIE SYSTEME ZUR VERWENDUNG DER ZUSAMMENSETZUNGEN
COMPOSITIONS DE HFO-1234YF, HFC-32, HFC-152A, ET HYDROCARBURES ET SYSTEMES D'UTILISATION DES COMPOSITIONS

(30) Priority: 21.10.2021 US 202163270200 P
(43) Date of publication of application: 28.08.2024
(60) Divisional application: 26208519.4 / 4 840 929
(73) Proprietor: The Chemours Company FC, LLC, Wilmington, Delaware 19801 (US)
(72) Inventor: JUHASZ, Jason R., Hockessin, Delaware 19707 (US); SIMONI, Luke David, Wilmington, Delaware 19806 (US); SNYDER, David Matthew, Swarthmore, Pennsylvania 19081 (US)
(74) Representative: Abitz & Partner
(86) International application number: PCT/US2022/047345
(87) International publication number: WO 2023/069666

(56) References cited:
- EP-A1- 3 861 083
- KR-A- 20150 122 452
- US-A1- 2008 230 738
- US-A1- 2010 123 095
- US-A1- 2019 062 613
- US-A1- 2021 261 842

## Description

### FIELD

The present invention is directed to compositions comprising HFO-1234yf, HFC-152a, HFC-32, and at least one hydrocarbon and use as refrigerants in air conditioning and heat pump systems.

### BACKGROUND

The automotive industry is going through an architecture platform rejuvenation from using an internal combustion engine (ICE) for propulsion to using electric motors for propulsion. This platform rejuvenation is severely limiting the size of the internal combustion engine (ICE) in hybrid, plug-in hybrid vehicles or possibly eliminating the ICE altogether in pure electric vehicles. Some vehicles still maintain an ICE and are noted as hybrid electric vehicles (HEV) or plug-in hybrids electric vehicles (PHEV) or mild hybrids electric vehicles (MHEV). Vehicles which are fully electric and have no ICE are denoted as full electric vehicles (EV), including battery electric vehicles (BEV). All HEV, PHEV, MHEV and EVs use at least one electric motor, where the electric motor provides some form of propulsion for the vehicles normally provided by the internal combustion engine (ICE) found in gasoline/diesel powered vehicles.

In electrified vehicles, the ICE is typically reduced in size (HEV, PHEV, or MHEV) or eliminated (EV) to reduce vehicle weight thereby increasing the electric drive-cycle. While the ICE's primary function is to provide vehicle propulsion, it also provides heat to the passenger cabin as a secondary function. Typically, heating is required when ambient conditions are 10°C or lower. In a non-electrified vehicle, there is excess heat from the ICE, which can be scavenged and used to heat the passenger cabin. It should be noted that while the ICE may take some time (several minutes) to heat up and generate heat, it functions well down to temperatures as low as -30°C. Therefore, in electrified vehicles, ICE size reduction or elimination is creating a demand for effective alternative heating of the passenger cabin. In current EVs, with no ICE, positive temperature coefficient (PTC) heaters are being used. Use of a heat pump for cooling and heating can replace the PTC heater along with the air conditioning system and allow more efficient cooling and heating.

Due to environmental pressures, R-134a, a hydrofluorocarbon or HFC, has been phased out for automobile air conditioning in favor of lower global warming potential (GWP) refrigerants with GWP < 150. While HFO-1234yf, a hydrofluoro-olefin, meets the low GWP requirement (GWP =4 per Pappadimitriou and GWP <1 per AR5), it has lower refrigeration capacity compared to R-134a and may not fully meet the heating requirements at low (-10°C) to very low (-30°C) ambient temperatures in current system designs. Refrigerant blends commonly used in stationary refrigerant applications are another option for automotive heat pumps. Examples of compositions comprising HFO-1234yf are disclosed in WO2007/126414;. US 2010/123095 relates to compositions for use in refrigeration, air-conditioning, and heat pump systems wherein the composition comprises 2,3,3,3-tetrafluoropropene (HFC-1234yf) and at least one hydrocarbon. US 2021/261842 provides azeotropic or azeotrope-like compositions comprising 1234yf and at least one component selected from a group comprising of R-134, and R-134a. US 2008/230738. relates to compositions for use in refrigeration, air-conditioning, and heat pump systems wherein the composition comprises a fluoroolefin and at least one other component. US 2019/062613 describes a refrigerant comprising a first refrigerant component and a second refrigerant component, and having a global warming potential (GWP) of 500 or less, wherein the first refrigerant component is at least one selected from difluoromethane and tetrafluoropropene, and the second refrigerant component is at least one selected from carbon dioxide and a hydrocarbon having 3 to 4 carbon atoms. KR20150122452 relates to a mixed refrigerant composed of R32 and RC270 and R1234yf which can be used as a refrigerant in a vapor compression refrigerator / air conditioner. EP3861083 describes refrigerant compositions including 2,3,3,3-tetrafluoropropene (HFO-1234yf) and at least one of ethane (R-170) or propane (R-290) which exhibit near-azeotropic or azeotrope-like behavior

Similarly, the heating and cooling of stationary residential and commercial structures also suffers from a lack of suitable low GWP refrigerants to replace the older high GWP refrigerants currently in use.

Therefore, there is a need for low GWP heat pump type fluids to meet the ever-increasing needs of hybrid, mild hybrid, plug-in hybrid and electric vehicles, electrified mass transit, and residential and commercial structures for thermal management which can provide both cooling and heating.

### SUMMARY

The present invention relates to compositions of environmentally friendly refrigerant blends with low GWP, (GWP less than or equal to 100) low toxicity (class A per ANSI/ASHRAE standard 34 or ISO standard 817) ), and low flammability (class 2 or class 2L per ASHRAE 34 or ISO 817) with low temperature glide for use in a hybrid, mild hybrid, plug-in hybrid, or full electric vehicles for complete vehicle thermal management (transferring heat from one part of the vehicle to another). The thermal management system may operate to provide cooling and/or heating of the power electronics, battery, motor and provide air conditioning (A/C) and/or heating to the passenger cabin. These refrigerants can also be used for mass transit mobile applications which benefit from a heat pump type system enabling both heating and cooling of batteries, motors, and passenger compartment areas. Mass transit mobile applications are not limited to, but can include transport vehicles such as ambulances, buses, shuttles, and trains.

In one aspect of the invention, the compositions include refrigerant blends containing HFO-1234yf, HFC-152a, HFC-32, and at least one hydrocarbon selected from the group consisting of propane, propylene, cyclopropane, n-butane, and isobutane. Compositions of the present invention exhibit low temperature glide over the operating conditions of vehicle thermal management systems. Due to the manner in which automotive vehicles are repaired or serviced, having a low temperature glide fluid or no glide would be preferred. Currently, during the vehicle A/C repair or service processes, refrigerants are handled through specific automotive service machines which recover the refrigerant, recycle the refrigerant to some intermittent quality level removing gross contaminants and then recharge the refrigerant back into the vehicle after repairs or servicing have been completed. These machines are denoted as R/R/R machines since they recover, recycle, and recharge refrigerant. This on-site recovery, recycle and recharge of refrigerant during vehicle maintenance or repair, is possible because a single compound refrigerant, currently HFO-1234yf, is being used. The current automotive service machines are not typically capable of handling refrigerant blends that may fractionate during use, and possibly exhibit preferential leak of the lowest boiling component(s). Thus, the refrigerant removed from a system during service may not yield the same percentages of the components as the original blend that was charged. Since the refrigerant is handled "on-site" at a vehicle repair shop, there is no opportunity to reconstitute the blend refrigerant back to the original composition concentrations as is done by a refrigerant recycler. Refrigerants with higher temperature glide can sometimes require "reconstitution" to the original formulation otherwise a loss in cycle performance can occur. Therefore, a need exists for refrigerants which have lower temperature glide for automotive applications. Since a heat pump fluid would be handled in the same manner as the air-conditioning fluid, this requirement for low temperature glide would also apply for a heat pump type fluid as it would be handled and/or serviced in the same manner as the traditional air-conditioning fluids. Additionally, current heat exchanger designs are based on use of single compound refrigerants. A new refrigerant with significant temperature glide could require a complete redesign of the heat exchangers and other system components in order to maintain overall system performance of incumbent systems utilizing single component fluids.

While HFO-1234yf can be used as an air-conditioning refrigerant, it is limited in its ability to perform as a heat pump type fluid, i.e., capable of providing the capacity needed in both cooling and heating modes. Therefore, the refrigerants noted herein uniquely provide improved capacity over HFO-1234yf in the heating operating range, and/or extend the heating range capability over HFO-1234yf to evaporator temperatures as low as -30°C, provide similar or improved efficiency (COP), have low GWP and low to mild flammability, while also uniquely exhibiting low temperature glide. Hence these refrigerants are most useful in electrified vehicle applications, particularly HEV, PHEV, MHEV, EV and mass transit vehicles which require these properties over the lower end heating range. It should be noted that a heat pump fluid needs to perform well in an air-conditioning cycle, i.e., refrigerant average condensing temperatures up to 40°C, desirably providing equivalent or increased capacity versus HFO-1234yf. Therefore, the refrigerant blends noted herein perform well over a range of temperatures, particularly from -30°C up to +40°C and can provide both heating and cooling depending upon which cycle is required by the heat pump system.

The present inventors have discovered refrigerant blends that provide cooling capacity higher than HFO-1234yf alone in heating mode, COP equal to or higher than the COP of HFO-1234yf alone in heating mode, with average temperature glide less than 4 K, preferably less than 3 K, or even less than 2.5 K, are non-toxic and that would be classified as class 2 or 2L flammability by ASHRAE.

The present invention includes the following aspects and embodiments:
In one embodiment, disclosed herein are compositions useful as refrigerants and heat transfer fluids. The compositions disclosed herein comprise: 2,3,3,3-tetrafluoropropene (HFO-1234yf), difluoromethane (HFC-32), 1,1-difluoroethane (HFC-152a), and at least one hydrocarbon selected from the group consisting of propane, propylene, cyclopropane, n-butane, and isobutane.

According to any of the foregoing embodiments, also disclosed herein are compositions comprising a refrigerant blend comprising from 67 to 91 weight percent HFO-1234yf, from 1 to 9 weight percent HFC-32, from 2 to 20 weight percent HFC-152a, and from about 1 to 4 weight percent hydrocarbon selected from the group consisting of propane, propylene, cyclopropane, n-butane, and isobutane.

According to any of the foregoing embodiments, also disclosed herein are compositions wherein said refrigerant blend consists essentially of from 67 to 91 weight percent HFO-1234yf, from 1 to 9 weight percent HFC-32, from 2 to 20 weight percent HFC-152a, and from about 1 to 4 weight percent hydrocarbon selected from the group consisting of propane, propylene, cyclopropane, n-butane, and isobutane.

According to any of the foregoing embodiments, also disclosed herein are compositions wherein said refrigerant blend consists essentially of from about 72 to 88 weight percent HFO-1234yf, from about 2 to 7 weight percent HFC-32, from about 5 to 20 weight percent HFC-152a, and from about 1 to 4 weight percent propane.

According to any of the foregoing embodiments, also disclosed herein are compositions wherein said refrigerant blend consists essentially of from about 70 to 90 weight percent HFO-1234yf, from about 4 to 8 weight percent HFC-32, from about 2 to 20 weight percent HFC-152a, and from about 1 to 4 weight percent cyclopropane.

According to any of the foregoing embodiments, also disclosed herein are compositions wherein said refrigerant blend consists essentially of from about 70 to 91 weight percent HFO-1234yf, from about 4 to 8 weight percent HFC-32, from about 2 to 20 weight percent HFC-152a, and from about 1 to 4 weight percent propylene.

According to any of the foregoing embodiments, also disclosed herein are compositions wherein said refrigerant blend consists essentially of from about 67 to 85 weight percent HFO-1234yf, from about 5 to 9 weight percent HFC-32, from about 5 to 20 weight percent HFC-152a, and from about 1 to 4 weight percent isobutane.

According to any of the foregoing embodiments, also disclosed herein are compositions wherein said refrigerant blend consists essentially of from about 67 to 85 weight percent HFO-1234yf, from about 6 to 9 weight percent HFC-32, from about 7 to 20 weight percent HFC-152a, and from about 1 to 4 weight percent n-butane.

According to any of the foregoing embodiments, also disclosed herein are compositions wherein said refrigerant blend provides average temperature glide of about 0.1 K to less than about 4 K.

According to any of the foregoing embodiments, also disclosed herein are compositions wherein said refrigerant blend provides average temperature glide of about 0.1 K to less than about 3 K.

According to any of the foregoing embodiments, also disclosed herein are compositions wherein said refrigerant blend provides average temperature glide of about 0.1 K to less than about 2.5 K.

According to any of the foregoing embodiments, also disclosed herein are compositions wherein said refrigerant blend has a GWP of equal to or less than about 100 based on AR5.

According to any of the foregoing embodiments, also disclosed herein are compositions wherein said refrigerant blend consists essentially of has a GWP of less than about 75 based on AR5.

According to any of the foregoing embodiments, also disclosed herein are compositions wherein said refrigerant blend consists essentially of has a GWP of less than about 50 based on AR5.

According to any of the foregoing embodiments, also disclosed herein are compositions further comprising at least one additional compound:
a) comprising at least one compound selected from the group consisting of HCFC-244bb, HFC-245cb, HFC-254eb, CFC-12, HCFC-124, 3,3,3-trifluoropropyne, HCC-1140, HFC-1225ye, HFO-1225zc, HFC-134a, HFO-1243zf, and HCFO-1131; or
b) comprising at least one compound selected from the group consisting of: HFC-23, HCFC-31, HFC-41, HFC-143a, HCFC-22, HCC-40, HFC-161, HFO-1141, HCO-1140, HCFC-151a, HCC-150a, HCC-160, HCFO-1130a, HCFC-141b, HFC-143a, HCFO-1122, and HCFC-142b; or
c) combinations of a) and b);
wherein the total amount of additional compound comprises greater than 0 and less than 1 weight percent.

According to any of the foregoing embodiments, also disclosed herein are compositions wherein the additional compound includes at least one of HFC-161, HFO-1141, HCO-1140, HCFC-151a, HCC-150a, or HCC-160 or combinations thereof.

According to any of the foregoing embodiments, also disclosed herein are compositions wherein said refrigerant blend consists essentially of wherein the additional compounds comprise HFC-143a, HCC-40, HFC-161 and HCFC-151a.

According to any of the foregoing embodiments, also disclosed herein are compositions wherein the additional compounds comprise HFO-1243zf, HFC-143a, HCC-40, HFC-161, and HCFC-151a.

According to any of the foregoing embodiments, also disclosed herein are compositions wherein the additional compounds comprise HFO-1243zf, HCC-40, and HFC-161.

According to any of the foregoing embodiments, also disclosed herein are compositions wherein said refrigerant blend has a burning velocity of 10 cm/s or less, when measured in accordance with ISO 817 vertical tube method.

According to any of the foregoing embodiments, also disclosed herein are compositions wherein said refrigerant blend is classified as 2L for flammability as defined in ANSI/ASHRAE Standard 34.

According to any of the foregoing embodiments, also disclosed herein are compositions wherein said refrigerant blend has an LFL of less than 10 volume percent when measured in accordance with ASTM-E681.

According to any of the foregoing embodiments, also disclosed herein are compositions further comprising a lubricant.

According to any of the foregoing embodiments, also disclosed herein are compositions wherein said lubricant comprises at least one selected from the group consisting of polyalkylene glycol, polyol ester, poly-α-olefin, and polyvinyl ether.

According to any of the foregoing embodiments, also disclosed herein are compositions wherein the polyol ester lubricant is obtained by reacting a carboxylic acid with a polyol comprising a neopentyl backbone selected from the group consisting of neopentyl glycol, trimethylolpropane, pentaerythritol, dipentaerythritol, and mixtures thereof.

According to any of the foregoing embodiments, also disclosed herein are compositions wherein the carboxylic acid has 2 to 18 carbon atoms.

According to any of the foregoing embodiments, also disclosed herein are compositions wherein said lubricant has volume resistivity of greater than 10¹⁰ Ω-m at 20°C.

According to any of the foregoing embodiments, also disclosed herein are compositions wherein said lubricant has surface tension of from about 0.02 N/m to 0.04 N/m at 20°C.

According to any of the foregoing embodiments, also disclosed herein are compositions wherein said lubricant has a kinemetic viscosity of from about 20 cSt to about 500 cSt at 40°C.

According to any of the foregoing embodiments, also disclosed herein are compositions wherein said lubricant has a breakdown voltage of at least 25 kV.

According to any of the foregoing embodiments, also disclosed herein are compositions wherein said lubricant has a hydroxy value of at most 0.1 mg KOH/g.

According to any of the foregoing embodiments, also disclosed herein are compositions further comprising from 0.1 to 200 ppm by weight of water.

According to any of the foregoing embodiments, also disclosed herein are compositions further comprising from about 10 ppm by volume to about 0.35 volume percent oxygen.

According to any of the foregoing embodiments, also disclosed herein are compositions further comprising from about 100 ppm by volume to about 1.5 volume percent air.

According to any of the foregoing embodiments, also disclosed herein are compositions further comprising a stabilizer.

According to any of the foregoing embodiments, also disclosed herein are compositions wherein the stabilizer is selected from the group consisting of nitromethane, ascorbic acid, terephthalic acid, azoles, phenolic compounds, cyclic monoterpenes, terpenes, phosphites, phosphates, phosphonates, thiols, and lactones.

According to any of the foregoing embodiments, also disclosed herein are compositions wherein the stabilizer is selected from tolutriazole, benzotriazole, tocopherol, hydroquinone, t-butyl hydroquinone, 2,6-di-terbutyl-4-methylphenol, fluorinated epoxides, n-butyl glycidyl ether, hexanediol diglycidyl ether, allyl glycidyl ether, butylphenylglycidyl ether, d-limonene, α-terpinene, β-terpinene, α-pinene, β-pinene, or butylated hydroxytoluene.

According to any of the foregoing embodiments, also disclosed herein are compositions wherein the stabilizer is present in an amount from about 0.001 to 1.0 weight percent based on the weight of the refrigerant.

According to any of the foregoing embodiments, also disclosed herein are compositions further comprising at least one tracer.

According to any of the foregoing embodiments, also disclosed herein are compositions wherein said at least one tracer is present in an amount from about 1.00 ppm by weight to about 1000 ppm by weight.

According to any of the foregoing embodiments, also disclosed herein are compositions wherein said at least one tracer is selected from the group consisting of hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof.

According to any of the foregoing embodiments, also disclosed herein are compositions wherein said at least one tracer is selected from the group consisting of HFC-23, HCFC-31, HFC-41, HFC-161, HFC-143a, HFC-134a, HFC-125, HFC-236fa, HFC-236ea, HFC-245cb, HFC-245fa, HFC-254eb, HFC-263fb, HFC-272ca, HFC-281ea, HFC-281fa, HFC-329p, HFC-329mmz, HFC338mf, HFC-338pcc, CFC-12, CFC-11, CFC-114, CFC-114a, HCFC-22, HCFC-123, HCFC-124, HCFC-124a, HCFC-141b, HCFC-142b, HCFC-151a, HCFC-244bb, HCC-40, HFO-1141, HCFO-1130, HCFO-1130a, HCFO-1131, HCFO-1122, HFO-1123, HFO-1234ye, HFO-1243zf, HFO-1225ye, HFO-1225zc, PFC-116, PFC-C216, PFC-218, PFC-C318, PFC-1216, PFC-31-10mc, PFC-31-10my, and combinations thereof.

In another embodiment, disclosed herein is a refrigerant storage container containing the compositions according to any of the foregoing embodiments, wherein the refrigerant comprises gaseous and liquid phases.

In another embodiment, also disclosed herein are systems for heating and cooling the passenger compartment of an electric vehicle comprising an evaporator, compressor, condenser, and expansion device, each operably connected to perform a vapor compression cycle, the refrigerant composition of any of the foregoing embodiments being circulated through each of the evaporator, compressor, condenser, and expansion device.

According to any of the foregoing embodiments, also disclosed herein are cooling and heating systems, wherein the average temperature glide is less than 4.0 K, less than 3.0 K, or less than 2.5 K.

According to any of the foregoing embodiments, also disclosed herein are cooling and heating systems, wherein the system does not include a PTC heater.

According to any of the foregoing embodiments, also disclosed herein are cooling and heating systems, wherein the system is not a reversible cooling loop.

According to any of the foregoing embodiments, also disclosed herein are cooling and heating systems, wherein the system further comprises a reheater operably connected between the compressor and the condenser.

In another embodiment, also disclosed herein is a method for replacing HFO-1234yf in a heating and cooling system contained within an electric vehicle, comprising providing any of the foregoing compositions to said heating and cooling system as a heat transfer fluid.

According to any of the foregoing embodiments, also disclosed herein is a method for replacing HFO-1234yf, wherein the refrigerant blend produces volumetric capacity at least 7% higher, or 10% higher, or 15% higher, or even 20% higher than HFO-1234yf alone when operating under the same set of conditions.

According to any of the foregoing embodiments, also disclosed herein is a method for replacing HFO-1234yf, wherein the refrigerant blend produces COP equal to or greater than the COP of HFO-1234yf alone when operating under the same conditions.

In another embodiment, also disclosed herein is a method of servicing the heating and cooling system of an electric vehicle comprising removing all of a used refrigerant from the system and charging the system with any of the foregoing compositions.

In another embodiment, disclosed herein is a use of any of the foregoing compositions as a heat transfer fluid in a system for heating and cooling the passenger compartment of an electric vehicle.

The various aspects and embodiments of the invention can be used alone or in combinations with each other. Other features and advantages of the present invention will be apparent from the following more detailed description of the preferred embodiment which illustrates, by way of example, the principles of the invention.

### BRIEF DESCRIPTION OF THE DRAWINGS

FIG. 1 illustrates a reversible cooling or heating loop system, according to an embodiment.
FIG. 2 illustrates a reversible cooling or heating loop system, according to an embodiment.
FIG. 3 illustrates a cooling or heating loop system, according to an embodiment.
FIG. 4 illustrates a cooling or heating loop system, according to an embodiment.
FIG. 5 illustrates a cooling or heating loop system, according to an embodiment.

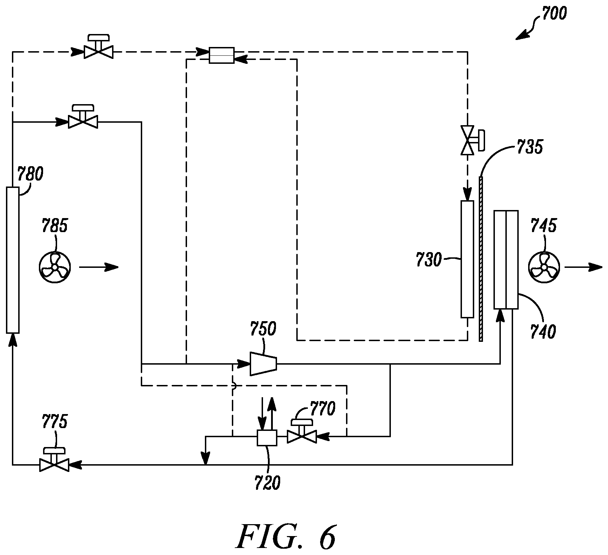

FIG. 6 illustrates a cooling or heating system, according to an embodiment.
FIG. 7 illustrates a cooling or heating system, according to an embodiment.
FIG. 8 illustrates a cooling or heating system, according to an embodiment.
FIG. 9 illustrates a cooling or heating system, according to an embodiment.

### DETAILED DESCRIPTION

### DEFINITIONS

As used herein, the term heat transfer composition or heat transfer fluid means a composition used to carry heat from a heat source to a heat sink.

A heat source is defined as any space, location, object, or body from which it is desirable to add, transfer, move or remove heat. Example of a heat source in this embodiment is the vehicle passenger compartment requiring air conditioning.

A heat sink is defined as any space, location, object, or body capable of absorbing heat. Example of a heat sink in this embodiment is the vehicle passenger compartment requiring heating.

A heat transfer system is the system (or apparatus) used to produce a heating or cooling effect in a particular location. A heat transfer system in this invention implies the heating or cooling system which provides heating or cooling of the passenger compartment of an automobile. Sometimes this system is called a heat pump system and may be a reversible heating system or a reversible cooling system, or simply a heating and cooling system.

A heat transfer fluid comprises at least one refrigerant and at least one member selected from the group consisting of lubricants, stabilizers, tracers, UV dyes, and flame suppressants.

Volumetric capacity is the amount of heat absorbed or rejected divided by the theoretical compressor displacement. Heat removed or absorbed is the enthalpy difference across a heat exchanger multiplied by the refrigerant mass flowrate. Theoretical compressor displacement is the refrigerant mass flowrate divided by the density of the gas entering the compressor (i.e., compressor suction density). More simply, volumetric capacity is the suction density multiplied by the heat exchanger enthalpy difference. Higher volumetric capacity allows the use of a smaller compressor for the same heat load. Herein, cooling capacity refers to the volumetric capacity in cooling mode and heating capacity refers to the volumetric capacity in heating mode.

Coefficient of performance (COP) is the amount of heat absorbed or rejected divided by the required energy input to operate the cycle (approximated by the compressor power). COP is specific to the mode of operation of a heat pump, thus COP for heating or COP for cooling. COP is directly related to the energy efficiency ratio (EER).

Subcooling refers to the reduction of the temperature of a liquid below that liquid's saturation point for a given pressure. The liquid saturation point is the temperature at which the vapor is completely condensed to a liquid. By cooling a liquid below the saturation temperature (or bubble point temperature), the net refrigeration effect can be increased. Subcooling thereby improves refrigeration capacity and energy efficiency of a system. The subcool amount is the amount of cooling below the saturation temperature (in degrees).

Superheating refers to the increase of the temperature of a vapor above that vapor's saturation point for a given pressure. The vapor saturation point is the temperature at which the liquid is completely evaporated to a vapor. Superheating continues to heat the vapor to a higher temperature vapor at the given pressure. By heating the vapor above the saturation temperature (or dew point temperature), the net refrigeration effect can be increased. Superheating thereby improves refrigeration capacity and energy efficiency of a system when it occurs in the evaporator. Suction line superheat does not add to the net refrigeration effect and can reduce efficiency and capacity. The superheat amount is the amount of heating above the saturation temperature (in degrees).

Temperature glide (sometimes referred to simply as "glide") is the absolute value of the difference between the starting and ending temperatures of a phase-change process by a refrigerant within a condenser of a refrigerant system, exclusive of any subcooling or superheating. For an evaporator, the glide is the difference in temperature between the dew point and the evaporator inlet. Glide may be used to describe condensation or evaporation of a near azeotrope or non-azeotropic composition. When referring to the temperature glide of an air conditioning or heat pump system, it is common to provide the average temperature glide being the average of the temperature glide in the evaporator and the temperature glide in the condenser. Glide is applicable to blend refrigerants, i.e. refrigerants that are composed of at least 2 components.

Low glide here is defined as average glide which is less than 4K over operating range of interest, more preferably low glide is less than 3K over operating range of interest, or most preferably being less than 2.5 K over operating range of interest (e.g., a glide ranging from great than 0 to less than about 2.5 K) under conditions for heating and cooling.

An azeotropic composition is a constant-boiling mixture of two or more substances that behave as a single substance at given conditions of pressure and temperature. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate, assuming constant temperature and pressure, within an air conditioning or heating system during operation. Additionally, an azeotropic composition will not fractionate upon leakage from an air conditioning or heating system.

A near-azeotropic composition (also commonly referred to as an "azeotrope-like composition") is a substantially constant boiling liquid mixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the mixture distills/refluxes without substantial composition change. Another way to characterize a near-azeotropic composition is that the bubble point vapor pressure and the dew point vapor pressure of the composition at a particular temperature are substantially the same.

Herein near-azeotropic compositions exhibit dew point pressure and bubble point pressure with virtually no pressure differential. That is, the difference in the dew point pressure and bubble point pressure at a given temperature will be a small value. It may be stated that compositions with a difference in dew point pressure and bubble point pressure of less than or equal to 3 percent (based upon the bubble point pressure) may be considered to be a near-azeotropic mixture.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method that includes materials, steps, features, components, or elements, in addition to those literally disclosed provided that these additional included materials, steps, features, components, or elements do materially affect the basic and novel characteristic(s) of the claimed invention, especially the mode of action to achieve the desired result of any of the processes of the present invention. The term 'consisting essentially of occupies a middle ground between "comprising" and 'consisting of'.

Where applicants have defined an invention or a portion thereof with an open-ended term such as "comprising," it should be readily understood that (unless otherwise stated) the description should be interpreted to also include such an invention using the terms "consisting essentially of" or "consisting of" including, for example, a composition consisting essentially of or consisting of.

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

### REFRIGERANT BLEND

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100-year time horizon is commonly the value referenced. For mixtures, a weighted average can be calculated based on the individual GWPs for each component. The United Nations Intergovernmental Panel on Climate Change (IPCC) provides vetted values for refrigerant GWPs in official assessment reports (ARs.) The fourth assessment report is denoted as AR4 and the fifth assessment report is denoted as AR5. The GWP values reported for refrigerant blends of the present invention herein refer to the AR5 values.

Ozone-depletion potential (ODP) is a number that refers to the amount of ozone depletion caused by a substance. The ODP is the ratio of the impact on ozone of a chemical compared to the impact of a similar mass of R-11 or fluorotrichloromethane. R-11 is a type of chlorofluorocarbon (CFC) and as such has chlorine in it which contributes to ozone depletion. Furthermore, the ODP of CFC-11 is defined to be 1.0. Other CFCs and hydrofluorochlorocarbons (HCFCs) have ODPs that range from 0.01 to 1.0. Hydrofluorocarbons (HFCs) and the hydrofluoro-olefins (HFO's) described herein have zero ODP because they do not contain chlorine, bromine or iodine, species known to contribute to ozone breakdown and depletion.

The compositions comprise a refrigerant blend consisting essentially of 2,3,3,3-tetrafluoropropene (HFO-1234yf), difluoromethane (HFC-32), 1,1-difluoroethane (HFC-152a), and at least one hydrocarbon selected from the group consisting of propane, cyclopropane, propylene, isobutane, and n-butane. Suitable amounts of HFC-32 in the refrigerant blend include but are not limited to an amount between about 1 weight percent and 9 weight percent or between about 2 weight percent and 7 weight percent or between about 4 weight percent and 8 weight percent or between 5 weight percent and 9 weight percent or between about 6 weight percent and 9 weight percent based on the total refrigerant blend composition. Suitable amounts of HFC-152a in the refrigerant blend include but are not limited to an amount between about 2 weight percent to 20 weight percent or between about 5 weight percent to 20 weight percent or between about 7 weight percent to 20 weight percent between about 8 weight percent to 16 weight percent or between about 10 weight percent to 16 weight percent or between about 10 weight percent to 14 weight percent based on the total refrigerant blend composition. Suitable amounts of HFO-1234yf in the refrigerant blend include but are not limited to an amount between about 67 weight percent to 91 weight percent or between about 72 weight percent to 88 weight percent or between about 70 weight percent to 90 weight percent or between about 70 weight percent to 91 weight percent or between about 67 weight percent to 85 weight percent based on the total refrigerant blend composition.

In one embodiment, the composition comprises a refrigerant blend comprising from about 67 to 91 weight percent HFO-1234yf, from about 1 to 9 weight percent HFC-32, from about 2 to 20 weight percent HFC-152a, and from about 1 to 4 weight percent hydrocarbon selected from the group consisting of propane, propylene, cyclopropane, n-butane, and isobutane. In another embodiment, said refrigerant blend consists essentially of from about 72 to 88 weight percent HFO-1234yf, from about 2 to 7 weight percent HFC-32, from about 5 to 20 weight percent HFC-152a, and from about 1 to 4 weight percent propane. In another embodiment, said refrigerant blend consists essentially of from about 70 to 90 weight percent HFO-1234yf, from about 4 to 8 weight percent HFC-32, from about 2 to 20 weight percent HFC-152a, and from about 1 to 4 weight percent cyclopropane. In another embodiment, the refrigerant blend consists essentially of from about 70 to 91 weight percent HFO-1234yf, from about 4 to 8 weight percent HFC-32, from about 2 to 20 weight percent HFC-152a, and from about 1 to 4 weight percent propylene. In another embodiment, the refrigerant blend consists essentially of from about 67 to 85 weight percent HFO-1234yf, from about 5 to 9 weight percent HFC-32, from about 5 to 20 weight percent HFC-152a, and from about 1 to 4 weight percent isobutane. In another embodiment, the refrigerant blend consists essentially of from about 67 to 85 weight percent HFO-1234yf, from about 6 to 9 weight percent HFC-32, from about 7 to 20 weight percent HFC-152a, and from about 1 to 4 weight percent n-butane.

The refrigerant blends have 0 ODP and low GWP, or GWP ≤100, or preferably GWP ≤75, or more preferably GWP≤50, or GWP≤40 (by AR5 values). Table 1, shown below, is a summary table showing refrigerant and GWP per the 5^{th} assessment report conducted by the Intergovernmental Panel on Climate Change (IPCC) for 2,3,3,3-tetrafluoropropene (HFO-1234yf), difluoromethane (HFC-32), 1,1-difluoroethane (HFC-152a), propane, cyclopropane, propylene, isobutane and n-butane. The inventive refrigerant blends can have a GWP ranging from greater than 0 to less than about 75, or greater than 0 to less than about 50, or greater than 0 to less than 40 based on the values from AR5 (Fifth Assessment Report for the IPCC) 100-year time horizon for the hydrofluorocarbons (HFC) and HFO-1234yf. The GWP values for propylene and cyclopropane were taken from Domanski, et al., "Low-GWP Refrigerants for Medium and High-Pressure Applications", Int. J. Refrigeration, 2017, 84, 198-209. The GWP values for propane, isobutane and n-butane are estimates.

For a refrigerant blend, GWP may be calculated as a weighted average of the individual GWP values for the components in the blend, taking into account the mass (e.g., weight %) of each ingredient in the blend. Table 1 provides the GWP values for each of the components of the refrigerant blends of the present invention along with a couple of examples of refrigerant blend GWP values.

**TABLE 1**

| **Refrigerant** | **GWP** |
|---|---|
| HFO-1234yf | 1 |
| HFC-32 | 677 |
| HFC-152a | 138 |
| propane | 4 |
| cyclopropane | 86 |
| propylene | 2 |
| isobutane | 5 |
| n-butane | 5 |
| 1234yf/32/152a/propane, 72/7/20/1 wt% | 76 |
| 1234yf/32/152a/propane, 86/5/7/2 wt% | 45 |
| 1234yf/32/152a/cyclopropane, 75/8/16/1 wt% | 78 |
| 1234yf/32/152a/cyclopropane, 81/5/13/1 wt% | 54 |
| 1234yf/32/152a/propylene, 71/8/20/1 wt% | 83 |
| 1234yf/32/152a/propylene, 88/5/5/2 wt% | 42 |
| 1234yf/32/152a/isobutane, 67/9/20/4 wt% | 89 |
| 1234yf/32/152a/isobutane, 85/6/7/2 wt% | 51 |
| 1234yf/32/152a/n-butane, 70/7/20/3 wt% | 76 |
| 1234yf/32/152a/n-butane, 83/7/8/2 wt% | 59 |

The refrigerant blends as described herein operate in heat exchangers, i.e., evaporators and/or condensers with low temperature glide. Thus, there is limited fractionation of the composition in operation providing efficient and consistent performance for cooling and heating.

In some embodiments, the refrigerant blends provide average temperature glides less than 4K over operating range of interest, more preferably low glide is less than 3K over operating range of interest, more preferable being less than 2.5 K over operating range of interest, with most preferable being less than 2.0 K over operating range of interest, (e.g., a glide ranging from great than 0 to less than about 2.0K). This effect is observed, when any of the foregoing refrigerant blends are used in a heat pump operating in heating mode.

### REFRIGERANT ADDITIVES

The compositions of the present invention comprising a refrigerant blend may further comprise a lubricant and be used as a heat transfer fluid. The composition of the present invention containing the refrigerant blend of the present invention and the lubricant may contain additives such as a stabilizer, a leakage detection material (e.g., UV dye), a tracer, and other beneficial additives.

The lubricant chosen for this composition preferably has sufficient solubility in the refrigerant blend to ensure that the lubricant can return to the compressor from the evaporator. Furthermore, the miscibility must not be so great as to reduce the effective viscosity of the lubricant for lubricating the compressor. In one preferred embodiment, the lubricant and refrigerant blend are miscible over a broad range of temperatures. For use in mobile air-conditioning and heating, miscibility over a temperature range from about -40°C to about +40°C is desirable. Lubricants of the invention may include polyalkylene glycol lubricants (PAG), polyol ester lubricants (POE), polyvinyl ether lubricants (PVE), poly-α-olefins (PAO), alkylbenzenes, mineral oils, fluorinated polyethers, and silicon lubricants.

Preferred lubricants may be one or more polyalkylene glycol type lubricants (PAG), one or more polyol ester type lubricants (POE), one or more poly-α-olefins (PAO), or one or more polyvinyl ether lubricants. Additionally, lubricants for combination with the refrigerant blends of the present invention may be mixtures of any of PAG, POE, and/or PVE lubricants.

In one embodiment, polyalkylene glycol (PAG) oils are preferred and may be homopolymers or copolymers consisting of two or more oxypropylene groups. PAG oils can be un-capped, single-end capped, or double-end capped. Examples of commercial PAG oils include, but are not limited to ND-8, Castrol PAG 46, Castrol PAG 100, Castrol PAG 150, Daphne Hermetic PAG PL, and Daphne Hermetic PAG PR.

PAG lubricant properties that make them of use in the present invention include volume resistivity of greater than 10¹⁰ Ω-m at 20°C, surface tension of from about 0.02 N/m to 0.04 N/m at 20°C, kinemetic viscosity of from about 20 mm²/s to about 500 mm²/s (about 20 cSt to about 500 cSt) at 40°C, breakdown voltage of at least 25 kV, and hydroxy value of at most 0.1 mg KOH/g.

In one embodiment, the lubricant comprises PAG and the PAG is stable when exposed to the inventive composition wherein the refrigerant blend composition has a Total Acid Number (TAN), mg KOH/g number of less than about 1, greater than 0 and less than 1, greater than 0 and less than about 0.75 and, in some cases, greater than 0 and less than about 0.4. In an aspect of this embodiment, the lubricant comprises PAG and the refrigerant consists essentially of about 67 to 91 weight percent HFO-1234yf, about 1 to 9 weight percent HFC-32, about 2 to 20 weight percent HFC-152a, and about 1 to 4 weight percent hydrocarbon selected from the group consisting of propane, propylene, cyclopropane, n-butane, and isobutane. In another embodiment, the lubricant comprises PAG, and the refrigerant consists essentially of about 72 to 88 weight percent HFO-1234yf, about 2 to 7 weight percent HFC-32, about 5 to 20 weight percent HFC-152a, and about 1 to 4 weight percent propane. In another embodiment, the lubricant comprises PAG, and the refrigerant consists essentially of about 70 to 90 weight percent HFO-1234yf, about 4 to 8 weight percent HFC-32, about 2 to 20 weight percent HFC-152a, and about 1 to 4 weight percent cyclopropane. In another embodiment, the lubricant comprises PAG, and the refrigerant consists essentially of about 70 to 91 weight percent HFO-1234yf, about 4 to 8 weight percent HFC-32, about 2 to 20 weight percent HFC-152a, and about 1 to 4 weight percent propylene. In another embodiment the lubricant comprises PAG, and the refrigerant consists essentially of about 67 to 85 weight percent HFO-1234yf, about 5 to 9 weight percent HFC-32, about 5 to 20 weight percent HFC-152a, and about 1 to 4 weight percent isobutane. In another embodiment the lubricant comprises PAG, and the refrigerant consists essentially of about 67 to 85 weight percent HFO-1234yf, about 6 to 9 weight percent HFC-32, about 7 to 20 weight percent HFC-152a, and about 1 to 4 weight percent n-butane. And, in an additional embodiment, the lubricant comprises PAG, and the refrigerant consists essentially of any of the foregoing compositions, wherein selected from the group consisting of propane, propylene, cyclopropane, n-butane, and isobutane is present at about 2 to 4 weight percent. And, in an additional embodiment, the lubricant comprises PAG, and the refrigerant consists essentially of any of the foregoing compositions, wherein hydrocarbon selected from the group consisting of propane, propylene, cyclopropane, n-butane, and isobutane is present at about 3 to 4 weight percent. And, in a further aspect, the refrigerant composition further comprises greater than about 0 and less than 1 wt.% of additional compounds.

POE lubricants are typically formed by a chemical reaction (esterification) of a carboxylic acid, or a mixture of carboxylic acids, with an alcohol, or mixture of alcohols.

In one embodiment, the polyol esters as used herein include esters of a diol or a polyol having from about 3 to 20 hydroxyl groups and a carboxylic acid (or fatty acid) having from about 1 to 24 carbon atoms is preferably used as the polyol. An ester which can be used as the base oil is described in EUROPEAN Patent Application published in accordance with Art. 153(4) EP 2 727 980 A1. Here, examples of the diol include ethylene glycol, 1,3-propanediol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, 1,12-dodecanediol, and the like.

Examples of the above-described polyol include a polyhydric alcohol such as trimethylolethane, trimethylolpropane, trimethylolbutane, di(trimethylolpropane), tri(trimethylolpropane), pentaerythritol, di(pentaerythritol), tri(pentaerythritol), glycerin, polyglycerin (dimer to eicosamer of glycerin), 1,3,5-pentanetriol, sorbitol, sorbitan, a sorbitol-glycerin condensate, adonitol, arabitol, xylitol, mannitol, etc.; a saccharide such as xylose, arabinose, ribose, rhamnose, glucose, fructose, galactose, mannose, sorbose, cellobiose, maltose, isomaltose, trehalose, sucrose, raffinose, gentianose, melezitose, among others; partially etherified products and methyl glucosides thereof; and the like. Among these, a hindered alcohol such as neopentyl glycol, trimethylolethane, trimethylolpropane, trimethylolbutane, di(trimethylolpropane), tri(trimethylolpropane), pentaerythritol, di(pentaerythritol), tri(pentaerythritol), etc. is preferable as the polyol.

Though the fatty acid is not particularly limited on its carbon number, in general, a fatty acid having from 1 to 24 carbon atoms is used. In the fatty acid having from 1 to 24 carbon atoms, a fatty acid having 3 or more carbon atoms is preferable, a fatty acid having 4 or more carbon atoms is more preferable, a fatty acid having 5 or more carbon atoms is still more preferable, and a fatty acid having 10 or more carbon atoms is the most preferable from the standpoint of lubricating properties. In addition, a fatty acid having not more than 18 carbon atoms is preferable, a fatty acid having not more than 12 carbon atoms is more preferable, and a fatty acid having not more than 9 carbon atoms is still more preferable from the standpoint of compatibility with the refrigerant. In one embodiment the carboxylic acid has 2 to 18 carbon atoms.

In addition, the fatty acid may be either of a linear fatty acid and a branched fatty acid, and the fatty acid is preferably a linear fatty acid from the standpoint of lubricating properties, whereas it is preferably a branched fatty acid from the standpoint of hydrolysis stability. Furthermore, the fatty acid may be either of a saturated fatty acid and an unsaturated fatty acid. Specifically, examples of the above-described fatty acid include a linear or branched fatty acid such as pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, oleic acid, etc.; a so-called neo acid in which a carboxylic group is attached to a quaternary carbon atom; and the like. More specifically, preferred examples thereof include valeric acid (n-pentanoic acid), caproic acid (n-hexanoicacid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid,2-ethylpentanoic acid, 2-ethylhexanoic acid, 3,5,5-trimethylhexanoic acid, and the like. Incidentally, the polyol ester maybe a partial ester in which the hydroxyl groups of the polyol remain without being fully esterified; a complete ester in which all of the hydroxyl groups are esterified; or a mixture of a partial ester and a complete ester, with a complete ester being preferable.

In the polyol ester, an ester of a hindered alcohol such as neopentyl glycol, trimethylolethane, trimethylolpropane, trimethylolbutane, di(trimethylolpropane), tri(trimethylolpropane), pentaerythritol, di(pentaerythritol), tri(pentaerythritol), etc. is more preferable, with an ester of neopentyl glycol, trimethylolethane, trimethylolpropane, trimethylolbutane, or pentaerythritol being still more preferable, from the standpoint of more excellent hydrolysis stability; and an ester of pentaerythritol is the most preferable from the standpoint of especially excellent compatibility with the refrigerant and hydrolysis stability.

Preferred specific examples of the polyol ester include a diester of neopentyl glycol with one kind or two or more kinds of fatty acids selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolethane with one kind or two or more kinds of fatty acids selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolpropane with one kind or two or more kinds of fatty acids selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3, 5, 5-trimethylhexanoic acid; a triester of trimethylolbutane with one kind or two or more kinds of fatty acids selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; and a tetraester of pentaerythritol with one kind or two or more kinds of fatty acids selected from valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid. Incidentally, the ester with two or more kinds of fatty acids may be a mixture of two or more kinds of esters of one kind of a fatty acid and a polyol, and an ester of a mixed fatty acid of two or more kinds thereof and a polyol, particularly an ester of a mixed fatty acid and a polyol is excellent in low-temperature properties and compatibility with the refrigerant.

The POE lubricant used for electrified automotive air-conditioning application may have a kinematic viscosity (measured at 40°C, according to ASTM D445) between 20-500 mm²/s, or 75-110 mm²/s, and ideally about 80 mm²/s - 100 mm²/s and most specifically, between 85 mm²/s -95 mm²/s (20-500 cSt, or 75-110 cSt, and ideally about 80 cSt-100 cSt and most specifically, between 85 cSt-95 cSt). However, not wanting to limit the invention, it should be noted that other lubricant viscosities may be included depending on the needs of the electrified vehicle heat pump compressor. Suitable characteristics of an automotive POE type lubricant for use with the inventive composition are listed below.

| **Specification Item** | **Units** | **Method** | **POE Properties** |
|---|---|---|---|
| Viscosity at 40°C | mm²/s (cSt) | ASTM D445 | 80-90 |
| Viscosity at 100°C | mm²/s (cSt) | ASTM D445 | 9.0-9.3 |
| Viscosity Index | | ASTM D2270 | >80 |
| Color | Gardner | ASTM D1500 | <1 |
| Flash point (COC) | °C | ASTM 92 | 250 min |
| Pour point | °C | ASTM D97 | -40 max |
| Specific Gravity (20°C) | Kg/m3 | ASTM D1298 | 0.950-1.10 |
| Capping Efficiency | % | ASTM E326 | 80-90 |
| Total Acid Number | mgKOH/g | ASTM D974 | 0.1 max |
| Water content | ppm | ASTM E284 | 50 max |

In one embodiment, the lubricant comprises POE and the POE is stable when exposed to the inventive compositions wherein the refrigeration composition has an F-ion of less than about 500 ppm and in some cases an F-ion amount of greater than 0 and less than 500 ppm, greater than 0 and less than 100 ppm and, in some cases, greater than 0 and less than 50 ppm. In an aspect of this embodiment, the refrigerant consists essentially of about 67 to about 91 weight percent, preferably, about 72 weight percent to 88 weight percent, or preferably about 70 to 90 weight percent, or preferably about 70 to 91 weight percent, or about 67 to 85 weight percent HFO-1234yf; about 1 weight percent to 9 weight percent, or about 2 weight percent to 7 weight percent, or about 4 weight percent to 8 weight percent, or about 5 weight percent to 9 weight percent, or about 6 weight percent to 9 weight percent HFC-32; about 2 weight percent to 20 weight percent or about 5 weight percent to 20 weight percent, or about 7 weight percent to about 20 weight percent, or about 8 weight percent to about 16 weight percent, or about 10 weight percent to about 16 weight percent, or about 10 weight percent to about 14 weight percent HFC-152a; and about 1 weight percent to 4 weight percent, or about 1 weight percent to 3 weight percent, or about 2 weight percent to 4 weight percent, or about 2 weight percent to 3 weight percent hydrocarbon selected from the group consisting of propane, propylene, cyclopropane, n-butane, and isobutane. And, in a further aspect, the refrigerant composition further comprises greater than 0 and less than 1 wt.% of additional compounds.

In one embodiment, the lubricant comprises POE and the POE is stable when exposed to the inventive composition wherein the refrigerant blend composition has a Total Acid Number (TAN), mg KOH/g number of less than about 1, greater than 0 and less than 1, greater than 0 and less than about 0.75 and, in some cases, greater than 0 and less than about 0.4. In an aspect of this embodiment, the lubricant comprises POE and the refrigerant consists essentially of about 67 to 91 weight percent HFO-1234yf, about 1 to 9 weight percent HFC-32, about 2 to 20 weight percent HFC-152a, and about 1 to 4 weight percent hydrocarbon selected from the group consisting of propane, propylene, cyclopropane, n-butane, and isobutane. In another embodiment, the lubricant comprises POE and the refrigerant consists essentially of about 72 to 88 weight percent HFO-1234yf, about 2 to 7 weight percent HFC-32, about 5 to 20 weight percent HFC-152a, and about 1 to 4 weight percent propane. In another embodiment, the lubricant comprises POE and the refrigerant consists essentially of about 70 to 90 weight percent HFO-1234yf, about 4 to 8 weight percent HFC-32, about 2 to 20 weight percent HFC-152a, and about 1 to 4 weight percent cyclopropane. In another embodiment, the lubricant comprises POE and the refrigerant consists essentially of about 70 to 91 weight percent HFO-1234yf, about 4 to 8 weight percent HFC-32, about 2 to 20 weight percent HFC-152a, and about 1 to 4 weight percent propylene. In another embodiment the lubricant comprises POE and the refrigerant consists essentially of about 67 to 85 weight percent HFO-1234yf, about 5 to 9 weight percent HFC-32, about 5 to 20 weight percent HFC-152a, and about 1 to 4 weight percent isobutane. In another embodiment the lubricant comprises POE and the refrigerant consists essentially of about 67 to 85 weight percent HFO-1234yf, about 6 to 9 weight percent HFC-32, about 7 to 20 weight percent HFC-152a, and about 1 to 4 weight percent n-butane. And, in an additional embodiment, the lubricant comprises POE and the refrigerant consists essentially of any of the foregoing compositions, wherein selected from the group consisting of propane, propylene, cyclopropane, n-butane, and isobutane is present at about 2 to 4 weight percent. And, in an additional embodiment, the lubricant comprises POE and the refrigerant consists essentially of any of the foregoing compositions, wherein hydrocarbon selected from the group consisting of propane, propylene, cyclopropane, n-butane, and isobutane is present at about 3 to 4 weight percent. And, in a further aspect, the refrigerant composition further comprises greater than about 0 and less than 1 wt.% of additional compounds.

In another embodiment, PVE lubricants can be included as lubricant in the compositions of the present invention. Though not meant to limit the scope of the present invention in any way, in an embodiment of the present invention, the polyvinyl ether oil includes those taught in the literature such as described in U.S. Pat. Nos. 5,399,631 and 6,454,960. In another embodiment of the present invention, the polyvinyl ether oil is composed of structural units of the type shown by Formula 1:

- [C(R₁,R₂)-C(R₃, -R₄)] - Formula 1

where R₁, R₂, R₃, and R₄ are independently selected from hydrogen and hydrocarbons, where the hydrocarbons may optionally contain one or more ether groups. In a preferred embodiment of the present invention, R₁, R₂, and R₃ are each hydrogen, as shown in Formula 2:

- [CH₂-CH(-O-R₄)]- Formula 2

In another embodiment of the present invention, the polyvinyl ether oil is composed of structural units of the type shown by Formula 3:

- [CH₂-CH(-O-R₅)]ₘ- [CH₂-CH(-O-R₆)]ₙ Formula 3

where R5 and R6 are independently selected from hydrogen and hydrocarbons and where m and n are integers.

In one embodiment, the polyvinyl ether oil comprises copolymers of the following 2 units:
Unit 1: 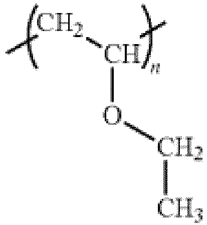
Unit 2:

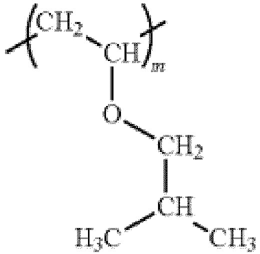

The properties of the lubricant (viscosity, solubility of the refrigerant and miscibility with the refrigerant) may be adjusted by varying the m/n ratio and the sum of m+n. In another embodiment, the PVE lubricants are those that are 50-95 weight percent of unit 1.

In one embodiment, the lubricant comprises PVE is stable when exposed to the inventive composition wherein the refrigerant blend composition has a Total Acid Number (TAN), mg KOH/g number of less than about 1, greater than 0 and less than 1, greater than 0 and less than about 0.75 and, in some cases, greater than 0 and less than about 0.4. In an aspect of this embodiment, the lubricant comprises PVE, and the refrigerant consists essentially of about 67 to 91 weight percent HFO-1234yf, about 1 to 9 weight percent HFC-32, about 2 to 20 weight percent HFC-152a, and about 1 to 4 weight percent hydrocarbon selected from the group consisting of propane, propylene, cyclopropane, n-butane, and isobutane. In another embodiment, the lubricant comprises PVE, and the refrigerant consists essentially of about 72 to 88 weight percent HFO-1234yf, about 2 to 7 weight percent HFC-32, about 5 to 20 weight percent HFC-152a, and about 1 to 4 weight percent propane. In another embodiment, the lubricant comprises PVE, and the refrigerant consists essentially of about 70 to 90 weight percent HFO-1234yf, about 4 to 8 weight percent HFC-32, about 2 to 20 weight percent HFC-152a, and about 1 to 4 weight percent cyclopropane. In another embodiment, the lubricant comprises PVE, and the refrigerant consists essentially of about 70 to 91 weight percent HFO-1234yf, about 4 to 8 weight percent HFC-32, about 2 to 20 weight percent HFC-152a, and about 1 to 4 weight percent propylene. In another embodiment the lubricant comprises PVE, and the refrigerant consists essentially of about 67 to 85 weight percent HFO-1234yf, about 5 to 9 weight percent HFC-32, about 5 to 20 weight percent HFC-152a, and about 1 to 4 weight percent isobutane. In another embodiment the lubricant comprises PVE, and the refrigerant consists essentially of about 67 to 85 weight percent HFO-1234yf, about 6 to 9 weight percent HFC-32, about 7 to 20 weight percent HFC-152a, and about 1 to 4 weight percent n-butane. And, in an additional embodiment, the lubricant comprises PVE, and the refrigerant consists essentially of any of the foregoing compositions, wherein selected from the group consisting of propane, propylene, cyclopropane, n-butane, and isobutane is present at about 2 to 4 weight percent. And, in an additional embodiment, the lubricant comprises PVE, and the refrigerant consists essentially of any of the foregoing compositions, wherein hydrocarbon selected from the group consisting of propane, propylene, cyclopropane, n-butane, and isobutane is present at about 3 to 4 weight percent. And, in a further aspect, the refrigerant composition further comprises greater than about 0 and less than 1 wt.% of additional compounds.

Similar properties and characteristics may be required for use of PVE lubricants in the compositions described herein and, in particular, for use in automotive cooling and heating systems, as for POE lubricants.

In a preferred embodiment, the lubricant is soluble in the refrigerant at temperatures between about -40°C and about 80°C, and more preferably in the range of about -30°C and about 40°C, and even more specifically between -25°C and 40°C. In another embodiment, attempting to maintain the lubricant in the compressor is not a priority and thus high temperature insolubility is not preferred.

The amount of lubricant can range from about 1 wt% to about 20 wt%, about 1 wt% to about 7 wt%, and, in some cases, about 1 wt% to about 3 wt%.

To suppress the hydrolysis of the lubricating oil, it is necessary to control the moisture concentration in the heating/cooling system for electric type vehicles. Therefore, the lubricant in this embodiment needs to have low moisture, typically less than 100 ppm by weight of water.

In a preferred embodiment, the lubricant comprises a POE lubricant that is soluble in the vehicle heat pump system refrigerant blend at temperatures between about -35°C and about 100°C, and more preferably in the range of about -35°C and about 50°C, and even more specifically between -30°C and 40°C. In another preferred embodiment, the POE lubricant is soluble at temperatures above about 70°C, more preferably at temperatures above about 80°C, and most preferably at temperatures between 90 -95°C.

Of particular note are PAG, POE, PAO, and PVE lubricants having: volume resistivity of greater than 10¹⁰ Ω-m at 20°C; surface tension of from about 0.02 N/m to 0.04 N/m at 20°C; a kinematic viscosity of from about 20 mm²/s to about 500 mm²/s, or about 50 mm²/s to about 200 mm²/s, or about 75 mm²/s to about 100 mm²/s (about 20 cSt to about 500 cSt, or about 50 cSt to about 200 cSt, or about 75 cSt to about 100 cSt) at 40°C; a breakdown voltage of at least 25 kV; and a hydroxy value of at most 0.1 mg KOH/g.

HFO type refrigerants, due to the presence of a double bond, may be subject to thermal instability and decompose under extreme use, handling or storage situations. Therefore, there may be advantages to adding stabilizers to HFO type refrigerants. Stabilizers may notably include nitromethane, ascorbic acid, terephthalic acid, azoles such as tolutriazole or benzotriazole, phenolic compounds such as tocopherol, hydroquinone, t-butyl hydroquinone, 2,6-di-tertbutyl-4-methylphenol, epoxides (possibly fluorinated or perfluorinated alkyl epoxides or alkenyl or aromatic epoxides) such as n-butyl glycidyl ether, hexanediol diglycidyl ether, allyl glycidyl ether, butylphenylglycidyl ether, cyclic monoterpenes, terpenes, such as d-limonene, α-terpinene, β-terpinene, γ-terpinene, α-pinene, or β-pinene, phosphites, phosphates, phosphonates, thiols and lactones. Examples of suitable stabilizers are disclosed in WO2019213004, WO2020222864, and WO2020222865.

Blends may or may not include stabilizers depending on the requirements of the system being used. If the refrigerant blend does include a stabilizer, it may include any amount from 0.001 wt% up to 1 wt%, preferably from about 0.01 to about 0.5 weight percent, more preferably, from about 0.01 to about 0.3 weight percent of any of the stabilizers listed above, and, in most case, preferably d-limonene.

In some embodiments, the compositions as disclosed herein may contain a tracer compound or tracers. The tracer may comprise two or more tracer compounds. In some embodiments, the tracer is present in the compositions at a total concentration of about 50 parts per million by weight (ppm) to about 1000 ppm, based on the weight of the total composition. In other embodiments, the tracer is present at a total concentration of about 50 ppm to about 500 ppm. Alternatively, the tracer is present at a total concentration of about 100 ppm to about 300 ppm.

The tracer may be present in the compositions of the present invention in predetermined quantities to allow detection of any dilution, contamination or other alteration of the composition. The presence of certain compounds in the composition may indicate by what method or process one of the components has been produced. The tracer may also be added to the composition in a specified amount in order to identify the source of the composition. In this manner, detection of infringement on patent rights may be accomplished. The tracers may be refrigerant compounds but are present in the composition at levels that are unlikely to impact performance of the refrigerant component of the composition.

Tracer compounds may be hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof. Examples of tracer compounds include, but are not limited to HFC-23 (trifluoromethane), HCFC-31 (chlorofluoromethane), HFC-41 (fluoromethane), HFC-161 (fluoroethane), HFC-143a (1,1,1-trifluoroethane), HFC-134a (1,1,1,2-tetrafluoroethane), HFC-125 (pentafluoroethane), HFC-236fa (1,1,1,3,3,3-hexafluoropropane), HFC-236ea (1,1,1,2,3,3-hexafluoropropane), HFC 245cb (1,1,1,2,2-pentafluoropropane), HFC-245fa (1,1,1,3,3-pentafluoropropane) , HFC-254eb (1,1,1,2-tetrafluoropropane), HFC-263fb (1,1,1 trifluoropropane), HFC-272ca (2,2-difluoropropane), HFC-281ea (2-fluoropropane), HFC-281fa (1-fluoropropane), HFC-329p (1,1,1,2,2,3,3,4,4-nonafluorobutane), HFC-329mmz (1,1,1-trifluoro-2-methylpropane), HFC-338mf (1,1,1,2,2,4,4,4-octafluorobutane), HFC-338pcc (1,1,2,2,3,3,4,4-octafluorobutane), CFC-12 (dichlorodifluoromethane), CFC-11 (trichlorofluoromethane), CFC-114 (1,2-dichloro-1,1,2,2-tetrafluoroethane), CFC-114a (1,1,-dichloro-1,2,2,2-tetrafluoroethane), HCFC-22 (chlorodifluoromethane), HCFC-123 (1,1-dichloro-2,2,2-trifluoroethane), HCFC-124 (2-chloro-1,1,1,2-tetrafluoroethane), HCFC-124a (1-chloro-1,1,2,2-tetrafluoroethane), HCFC-141b (1,1-dichloro-1-fluoroethane), HCFC-142b (1-chloro-1,1-difluoroethane), HCFC-151a (1-chloro-1-fluoroethane), HCFC-244bb (2-chloro-1,1,1,2-tetrafluoropropane), HCC-40 (chloromethane), HFO-1141 (fluoroethene), HCFO-1130 (1,2-dichloroethene), HCFO-1130a (1,1-dichloroethene), HCFO-1131 (1-chloro-2-fluoroethene), HCFO-1122 (2-chloro-1,1-difluoroethene), HFO-1123 (1,1,2-trifluoroethene), HFO-1234ye (1,2,3,3-tetrafluoropropene), HFO-1243zf (3,3,3-trifluoropropene), HFO-1225ye (1,2,3,3,3-pentafluoropropene), HFO-1225zc (1,1,3,3,3-pentafluoropropene), PFC-116 (hexafluoroethane), PFC-C216 (hexafluorocyclopropane), PFC-218 (octafluoropropane), PFC-C318 (octafluorocyclobutane), PFC-1216 (hexafluoroethane), PFC-31-10mc (1,1,1,2,2,3,3,4,4,4-decafluorobutane), PFC-31-10my (1,1,1,2,3,3,3-heptafluoro-2-trifluoromethylpropane), and combinations thereof.

### REFRIGERANT BLEND FLAMMABILITY

Flammability is a term used to mean the ability of a composition to ignite and/or propagate a flame. For refrigerants and other heat transfer compositions or working fluids, the lower flammability limit ("LFL") is the minimum concentration of the heat transfer composition in air that is capable of propagating a flame through a homogeneous mixture of the composition and air under test conditions specified in ASTM (American Society of Testing and Materials) E681. The upper flammability limit ("UFL") is the maximum concentration of the heat transfer composition in air that is capable of propagating a flame through a homogeneous mixture of the composition and air under the same test conditions.

In order to be classified by ANSI/ASHRAE (American Society of Heating, Refrigerating and Air-Conditioning Engineers) Standard 34 or ISO 817 ISO 817:2014(en) Refrigerants - Designation and Safety Classification as non-flammable (class 1, no flame propagation), a refrigerant must meet the conditions of ASTM E681 as formulated in both the liquid and vapor phase as well as non-flammable in both the liquid and vapor phases that result during leakage scenarios defined by ANSI/ASHRAE standard 34 :2019 or ISO 817:2014(en) Refrigerants - Designation and Safety Classification.

In order for a refrigerant blend to be classified by ANSI/ASHRAE (American Society of Heating, Refrigerating and Air-Conditioning Engineers) as low flammability (class 2L), the worst case of formulation (WCF) and the worst case of fractionation for flammability (WCFF) for the refrigerant blend must be determined based on manufacturing tolerances and vapor leak behavior. In order to be classified as 2L, low flammability, the WCF and WCFF must: 1) exhibit flame propagation when tested at 140°F (60°C) and 14.7 psia (101.3 kPa) and have an LFL >0.0062 lb/ft³ (0.10 kg/m³) and 2) have a maximum burning velocity of ≤3.9 in./s (10 cm/s) when tested at 73.4°F (23.0°C) and 14.7 psia (101.3 kPa). Additionally, the nominal refrigerant blend must have a heat of combustion <8169 Btu/lb (19,000 kJ/kg).

ASHRAE Standard 34 provides a methodology to calculate the heat of combustion for refrigerant blends using a balanced stoichiometric equation based on the complete combustion of one mole of refrigerant with enough oxygen for a stoichiometric reaction.

When HFO-1234yf, HFC-32, HFC-152a, and hydrocarbon components are blended together in certain proportions, the resulting blend has class 2L flammability as defined by ANSI/ASHRAE standard 34 and ISO 817. Class 2L flammability is inherently less flammable (i.e., lower energy release as exemplified by the Heat of Combustion or HOC value) than both class 2 and class 3 flammability and can be managed in automotive heating/cooling systems.

The inventive blends may have a flammability rating of 2L (when measured in accordance with ANSI/ASHRAE standard 34 definition for class 2L): a BV of less than 10cm/sec (when measured in accordance of ANSI/ASHRAE standard 34 using the vertical tube method as presented in ISO 817 Appendix C), and an LFL of less than 10 vol% (when measured in accordance with ASTM E681:09 (2015)).

The present inventive compositions comprising, consisting essentially of, or consisting of 2,3,3,3-tetrafluoropropene (HFO-1234yf), difluoromethane (HFC-32), 1,1-difluoroethane (HFC-152a), and at least one hydrocarbon selected from the group consisting of propane, propylene, cyclopropane, n-butane, and isobutane may be classified as Class 2L flammability by ASHRAE; and LFL of less than 10 volume percent; and a burning velocity less than 10/cm/sec. In particular, the refrigerant blends may comprise, consist essentially of, or consist of about 67 weight percent to 91 weight percent or between about 72 weight percent to 88 weight percent or between about 70 weight percent to 90 weight percent or between about 70 weight percent to 91 weight percent or between about 67 weight percent to 85 weight percent HFO-1234yf; about 1 weight percent and 9 weight percent or between about 2 weight percent and 7 weight percent or between about 4 weight percent and 8 weight percent or between 5 weight percent and 9 weight percent HFC-32; about 2 weight percent to 20 weight percent or between about 5 weight percent to 20 weight percent or between about 7 weight percent to 20 weight percent between about 8 weight percent to 16 weight percent or between about 10 weight percent to 16 weight percent or between about 10 weight percent to 14 weight percent HFC-152a; and about 1 weight percent to 4 weight percent, or about 1 weight percent to 3 weight percent, or about 2 weight percent to 4 weight percent, or about 2 weight percent to 3 weight percent hydrocarbon selected from the group consisting of propane, propylene, cyclopropane, n-butane, and isobutane and may be classified as Class 2L flammability by ASHRAE; have an LFL of less than 10 volume percent; and have a burning velocity less than 10/cm/sec..

In one embodiment, any of the foregoing refrigerant compositions can further comprise at least one additional compound selected from the group consisting of HCFC-244bb, HFC-245cb, HFC-254eb, HFO-1234ze, CFC-12, HCFC-124, 3,3,3-trifluoropropyne, HCC-1140, HFC-1225ye, HFO-1225zc, HFC-134a, HFO-1243zf, and HCFO-1131.

In one embodiment, any of the foregoing refrigerant compositions can further comprise at least one additional compound selected from the group consisting of HFC-23, HCFC-31, HFC-41, HFC-143a, HCFC-22, HCC-40, HFC-161, HFO-1141, HCO-1140, HCFC-151a, HCFO-1130a, HCFC-141b, HFO-1132a, HFC-143a, HCFO-1122, and HCFC-142b.

In one embodiment, any of the foregoing refrigerant compositions can further comprise at least one additional compound selected from the group consisting of HFC-143a, HCC-40, HFC-161, and HCFC-151a. Alternatively, the composition may comprise HFC-143a, HCC-40, HFC-161, and HCFC-151a.

In one embodiment, any of the foregoing refrigerant compositions can further comprise at least one additional compound selected from the group consisting of HFO-1243zf, 3,3,3-trifluoropropyne, HFC-143a, HCC-40, HFC-161, and HCFC-151a. Alternatively, the composition may comprise HFO-1243zf, HFC-143a, HCC-40, HFC-161, and HCFC-151a.

The amount of additional compounds present in any of the foregoing refrigerant compositions can be greater than 0 ppm and less than 5,000 ppm and, in particular, can range from about 5 to about 1,000 ppm, about 5 to about 500 ppm and about 5 to about 100 ppm.

In one embodiment, the amount of additional compounds present in any of the foregoing refrigerant compositions can be greater than 0 and less than 1 wt% of the refrigerant composition, preferably less than 0.5 weight percent, or more preferably less than 0.1 weight percent.

In one embodiment, any of the foregoing refrigerant compositions can further comprise an additional compound comprising at least one of an oligomer and/or a homopolymer of HFO-1234yf. The amount can range from greater than 0 to about 100 ppm, and in some case, about 2 ppm to about 100 ppm. In an aspect of this embodiment, the refrigerant comprises about 67 to 91 weight percent HFO-1234yf, about 1 to 9 weight percent or 2 to 7 weight percent or 4 to 8 weight percent or 5 to 9 weight percent of HFC-32, about 2 to 20 weight percent HFC-152a, and about 1 to 4 weight percent hydrocarbon selected from the group consisting of propane, propylene, cyclopropane, n-butane, and isobutane, and, in a further aspect, the refrigerant composition further comprises greater than about 0 and less than 1 weight percent of additional compounds in addition to the oligomer and homopolymer, preferably less than 0.5 weight percent, and even more preferably less than 0.1 weight percent.

Another embodiment of the invention relates to storing any of the foregoing compositions in gaseous and/or liquid phases within a sealed container. The water concentration within the gas and/or liquid phase in the sealed container ranges from about 0.1 to 200 ppm by weight. The oxygen concentration within the gas and/or liquid phase in the sealed container ranges from about 10 ppm by volume to about 0.35 volume percent at about 25°C. The air concentration within the gas and/or liquid phase in the sealed container ranges from about 100 ppm by volume to about 1.5 volume percent.

The container for storing the foregoing compositions can be constructed of any suitable material and design that is capable of sealing the compositions therein while maintaining gaseous and liquids phases. Examples of suitable containers comprise pressure resistant containers such as a tank, a filling cylinder, and a secondary filling cylinder. The container can be constructed from any suitable material such as carbon steel, manganese steel, chromium-molybdenum steel, among other low-alloy steels, stainless steel and in some case an aluminum alloy.

The compositions of the present invention may be prepared by any convenient method to combine the desired amount of the individual components. A preferred method is to weigh the desired component amounts and thereafter combine the components in an appropriate vessel. Agitation may be used, if desired. In another embodiment, any of the foregoing refrigerant composition can be prepared by blending HFO-1234yf, HFC-32, HFC-152a, hydrocarbon, and, in some cases, at least one of the additional compounds.

In a further embodiment, the compositions may be prepared from recycled or reclaimed refrigerant. One or more of the components may be recycled or reclaimed by means of removing contaminants, such as air, water, or residue, which may include lubricant or particulate residue from system components. The means of removing the contaminants may vary widely, but can include distillation, decantation, filtration, and/or drying by use of molecular sieves or other absorbents. Then the recycled or reclaimed component(s) may be combined with the other component(s) as describe above.

In an embodiment of the present invention a system for heating and cooling the passenger compartment of an electric vehicle is provided. The system comprises an evaporator, compressor, condenser and expansion device, each operably connected to perform a vapor compression cycle, wherein the system contains any of the foregoing compositions comprising a refrigerant blend consisting essentially of HFC-1234yf, HFC-32, HFC-152a, and at least one hydrocarbon selected from the group consisting of propane, propylene, cyclopropane, n-butane, and isobutane. The average temperature glide in the inventive system is less than 4.0 K, preferably less than 3.0 K, or more preferably less than 2.5 K. The system is preferably a heat pump. Due to the excellent performance of the heat pump system in both cooling and heating of the passenger compartment of an electric vehicle, the system may no longer require a positive temperature coefficient (PTC) heater.

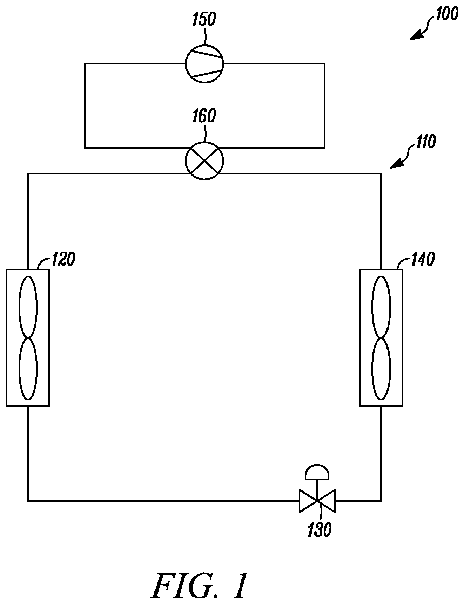

The refrigerant blends may be used in a variety of heating and cooling systems. In the embodiment of FIG. 1, a refrigeration system 100 having a refrigeration loop 110 comprises a first heat exchanger 120, a pressure regulator 130, a second heat exchanger 140, a compressor 150 and a four-way valve 160. The first and second heat exchangers are of the air/refrigerant type. The first heat exchanger 120 has passing through it the refrigerant of the loop 110 and the stream of air created by a fan.

In cooling mode, the refrigerant set-in motion by the compressor 150 passes, via the valve 160, through the heat exchanger 120, which acts as a condenser, that is to say gives up heat energy to the outside, then through the pressure regulator 130 then through the heat exchanger 140 that is acting as an evaporator thus cooling the stream of air intended to be blown into the motor vehicle cabin interior.

In heat pump mode, the direction of flow of the refrigerant is reversed using the valve 160. The heat exchanger 140 acts as a condenser while the heat exchanger 120 acts as an evaporator. The heat exchanger 140 can then be used to heat up the stream of air intended for the motor vehicle cabin.

Additional heat transfer loops may be connected to the heat pump system and absorb or reject heat at the heat exchangers 120 and/or 140 to allow transfer of heat away from the motor or battery, and therefore serve to provide thermal management of those components of the vehicle as well as cooling and heating for the passenger cabin.

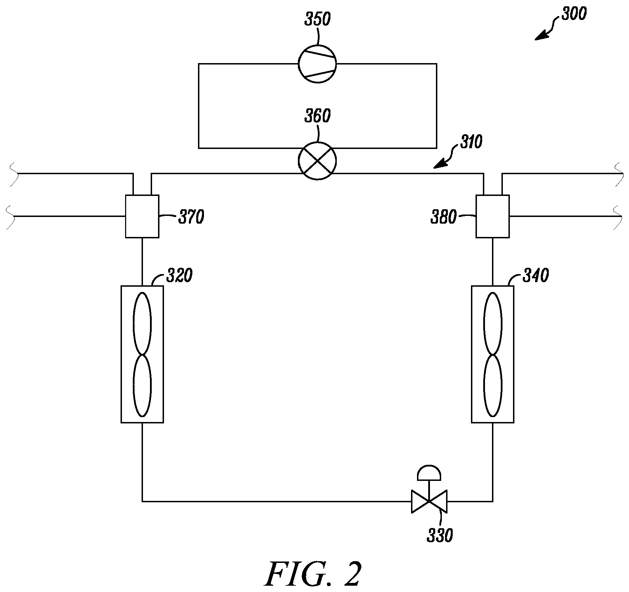

In the embodiment of FIG. 2, a refrigeration system 300 having a refrigeration loop 310 comprises a first heat exchanger 320, a pressure regulator 330, a second heat exchanger 340, a compressor 350 and a four-way valve 360. The first and second heat exchangers 320 and 340 are of the air/refrigerant type. The way in which the heat exchangers 320 and 340 operate is the same as in the first embodiment depicted in FIG. 1. Two fluid/liquid heat exchangers 370 and 380 are installed both on the refrigeration loop circuit 310 and on the engine cooling circuit or on a secondary glycol-water circuit. Installing fluid/liquid heat exchangers without going through an intermediate gaseous fluid (e.g., air) contributes to improving heat exchange by comparison with air/fluid heat exchangers.

In one embodiment, the system for heating and cooling the passenger compartment of an electric vehicle, the system further comprises a reheater operably connected between the compressor and the condenser for reduction of humidity in the passenger compartment during cooling mode.

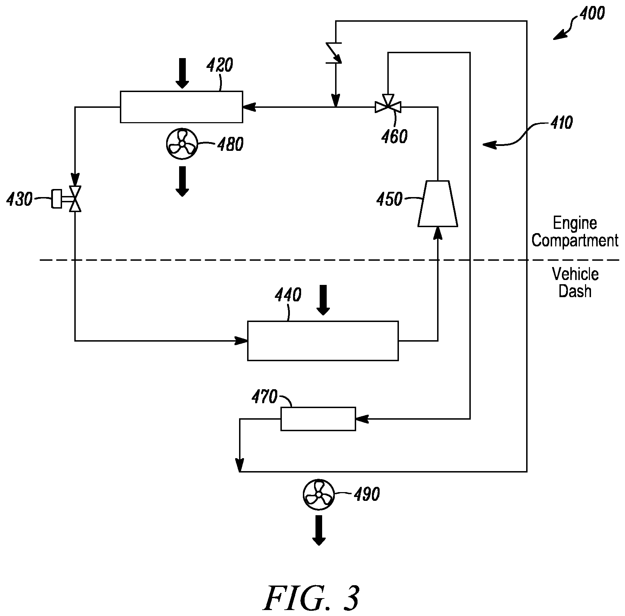

In the embodiment of FIG. 3, a refrigeration system 400 having a refrigeration loop 410 comprises a first heat exchanger (condenser) 420, a pressure regulator 430, a second heat exchanger (evaporator) 440, a compressor 450, a three-way valve 460, and a third heat exchanger (for reheat) 470. In cooling mode, at least a portion of the discharge flow exiting the compressor 450 is directed through the three-way valve 460 and into the third heat exchanger 470. The exit stream from the third heat exchanger 470 discharges into the inlet of the first heat exchanger 420. The refrigerant is condensed by the first heat exchanger 420 using an external fan 480 and ambient air as the heat sink. The existing saturated or subcooled liquid is expanded in the pressure regulator 430 and the resulting lower pressure saturated mixture of refrigerant liquid and vapor enters the second heat exchanger 440. The refrigerant evaporates in the second heat exchanger 440 through the use of a second fan 490 that is external to the refrigeration loop. The air passing across the second heat exchanger 440 is cooled to below the air dew point temperature. This causes the moisture in the air to partially condense, thereby lowering the absolute humidity of the air. The air then passes over the third heat exchanger 470, which transfers heat into the air, increasing the air temperature to above the dew point and lowering the relative humidity of the air, which is then supplied to the passenger compartment. This process of cooling to below the dew point temperature to remove moisture and subsequently reheating to above the dew point temperature allows for cooling and relative humidity control of the vehicle cabin. In heating mode, the three-way valve 460 is modulated to prohibit the flow of refrigerant to the heat exchanger 420 and all vehicle cabin heating is accomplished using the second heat exchanger 470 in the heat pump configuration described in FIG. 1.

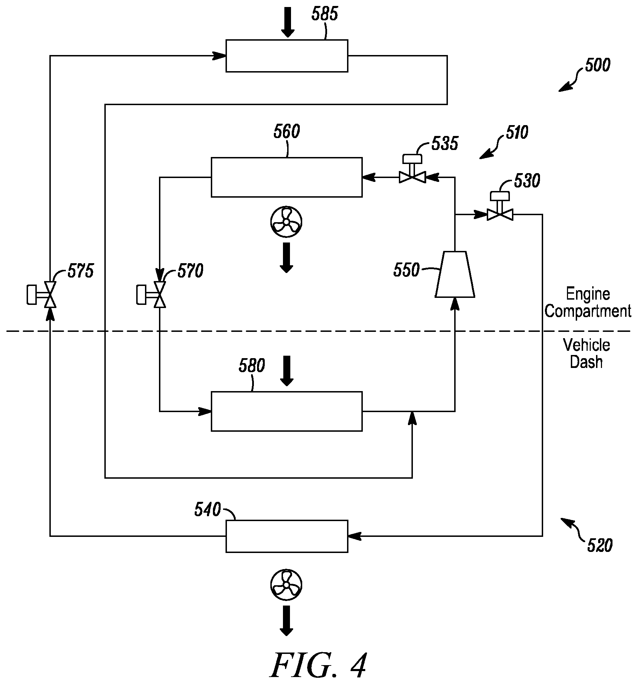

In the embodiment of FIG. 4, an air-conditioning (AC) and heat pump (HP) system 500, heating, cooling, or both can be accomplished in a vehicle cabin or for other vehicle loads. The system 500 includes an AC circuit 510 and a HP circuit 520. In air-conditioning only mode, the HP control valve 530 upstream of the heat pump condenser 540 will be closed and the refrigerant will flow from the compressor 550 into the air-cooled AC condenser 560, through an AC expansion valve 570, and into the AC evaporator 580; providing cooling to the cabin. From the AC evaporator 580; providing cooling to the cabin. From the AC evaporator 580, the refrigerant will flow back to the compressor 550. In heat pump only mode, the AC control valve 535 upstream of the AC condenser 560 will be closed and the refrigerant will flow from the compressor 550 into the HP condenser 540 to provide heating to the cabin. From the HP condenser 540 the refrigerant will flow through the HP expansion valve 575 to the HP evaporator 585. A separate humidity control mode could be accomplished by sending a portion of the compressor discharge gas into the AC circuit 510 and the remaining portion into the HP circuit 520.

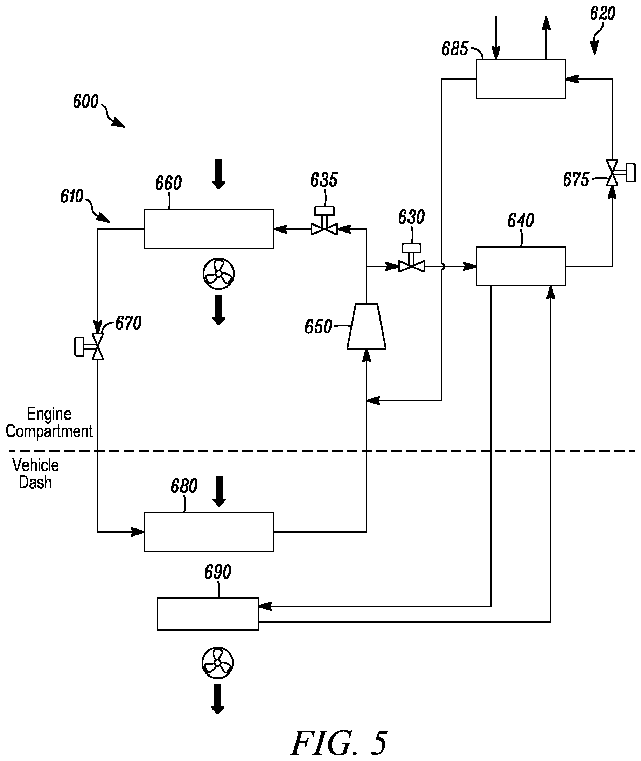

In the embodiment of FIG. 5, a system 600 for heating, cooling, or both can be accomplished for a vehicle cabin or for other vehicle loads. The system 600 includes an AC circuit 610 and a water-cooled/HP circuit 620. In AC only mode, the water loop control valve 630 upstream of the water-cooled condenser 640 will be closed and the refrigerant will flow from the compressor 650 into the AC condenser 660, through an AC expansion valve 670, and into the AC evaporator 680; providing cooling to the cabin. In HP only mode, the AC control valve 635 upstream of the AC condenser 660 will be closed and the refrigerant will flow from the compressor 650 into the water-cooled condenser 640. A heat transfer fluid (e.g., water or other heat transfer fluid) will take the heat generated in the water-cooled condenser 640 and transfer it to the cabin heater core 690; providing heat to the cabin. The heat transfer fluid may return from the cabin heater core 690 to the water-cooled condenser 640. The refrigerant will flow from the water-cooled condenser 640 through an HP expansion valve 675 into the HP evaporator 685 that cools a heat transfer fluid, which may be used to cool other components of the automobile and then back to the compressor 650. In some embodiments, there is one or more water/heat transfer fluid loops that may be used to heat and/or cool various other components of the vehicle. A separate humidity control mode could be accomplished by sending a portion of the compressor discharge gas into the AC circuit 610 and the remaining portion into the water cooled/HP circuit 620.

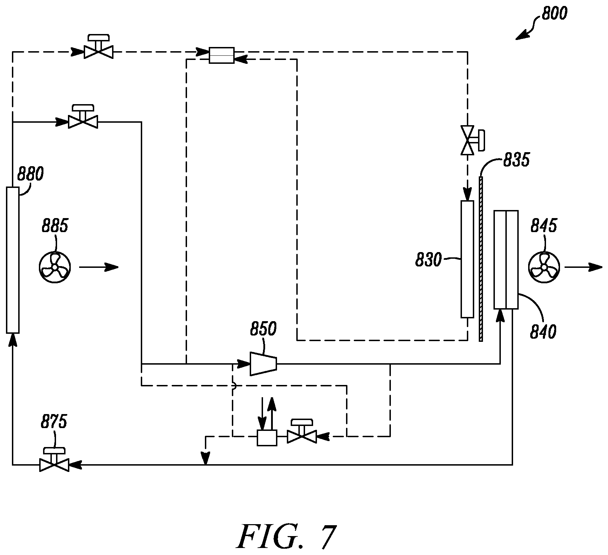

In the embodiments of FIG. 7 through FIG. 10, the same components exist in the system, but depending on the mode of operation, only some of those components are utilized.

In one embodiment, in heating mode wherein specific conditions exist where both the vehicle cabin and other vehicle components require heat, the refrigerant circuit 700 operates as shown in FIG. 7. Starting at the compressor 750, discharge refrigerant vapor will take two paths. One path is through the cabin condenser 740. The cabin condenser 740 is a refrigerant-to-air heat exchanger typically of the fin-tube or microchannel type and can be single or multiple pass. A first fan 745 in the vehicle ventilation ductwork will induce a flow of either 100% outside air or a mixture of outside air and return air from the vehicle cabin across this cabin condenser 740 and the refrigerant as it condenses will heat the air. In this mode, a physical bypass 735 within the vehicle ventilation ductwork will prevent any air from flowing over the cabin evaporator 730. The second path of refrigerant out of the compressor is through valve 770 and into a liquid/heat transfer fluid heat exchanger 720, which allows heat to be transferred from the warm refrigerant to the vehicle's heat transfer fluid loop (not shown). This vehicle heat transfer loop can then be used to manage other vehicle heat loads. The heat transfer fluid of the heat transfer fluid loop may be water or a water/glycol solution. The condensed refrigerant out of exchanger 720 then combines with the condenser 740 liquid refrigerant outlet and the combined stream flows through an expansion device 775, which will drop the pressure of the liquid refrigerant and generate a liquid-vapor mixture. This liquid-vapor mixture then flows through the outdoor heat exchanger 780 (i.e., evaporator in this setup). The outdoor heat exchanger 780 will be a refrigerant-to-air heat exchanger typically of the fin-tube or microchannel type and can be single or multiple pass. A second fan 785 will induce airflow across the outdoor heat exchanger 780 and allow the liquid-vapor refrigerant mixture to pick up heat from the ambient air and vaporize completely before it flows back to the compressor 750.

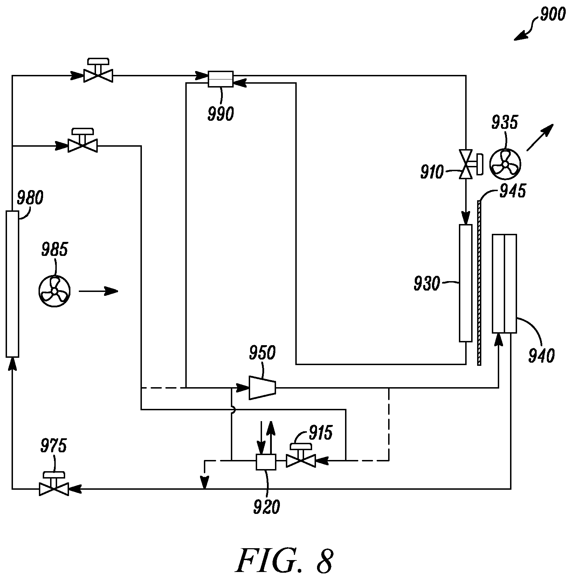

In another embodiment, in heating mode when specific conditions exist where only cabin heating is required, the refrigerant circuit 800 operates as shown in FIG. 8. Starting at the compressor 850, discharge vapor will first flow through the cabin condenser 840. A first fan 845 in the vehicle ventilation ductwork will induce a flow of either 100% outside air or a mixture of outside air and return air from the vehicle cabin across this cabin condenser 840 and the refrigerant will exchange heat between the condenser 840 and the air. In this mode, a physical bypass 835 within the vehicle ventilation ductwork will prevent any air from flowing over the cabin evaporator 830. The refrigerant will condense in the cabin condenser 840 and flow to an expansion device 875 which will drop the pressure of the liquid refrigerant and generate a liquid-vapor mixture. This liquid-vapor mixture flows through the outdoor heat exchanger 880 (i.e., evaporator in this setup). A second fan 885 will induce airflow across the outdoor heat exchanger 880 and allow the liquid-vapor refrigerant mixture to pick up heat from the ambient air and vaporize completely before it travels back to the compressor 850.

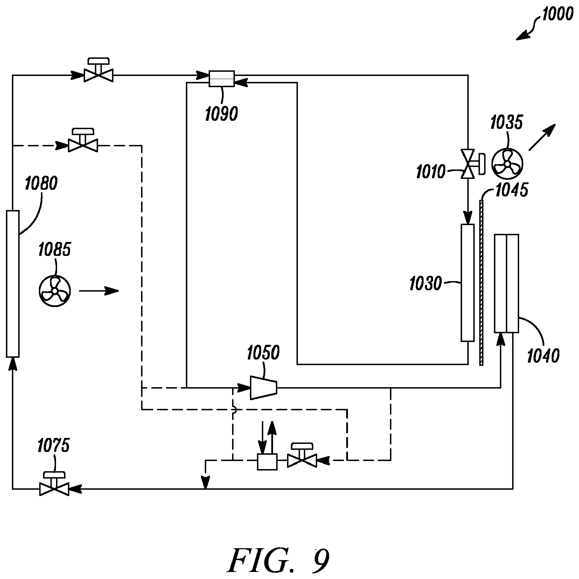

In another embodiment, in cooling mode when specific conditions exist where both the vehicle cabin and the vehicle components require cooling, the refrigerant circuit 900 operates as shown in FIG. 9. Starting at the compressor 950, discharge refrigerant vapor will first flow through the cabin condenser 940, wherein there will be no heat transfer as in this mode, a physical bypass 945 within the vehicle ventilation ductwork will prevent any air from flowing over the cabin condenser 940. Vapor refrigerant will pass through the cabin condenser 940 and flow through valve 975 and into the outdoor heat exchanger 980. In this mode, the outdoor heat exchanger 980 acts as a condenser as a first fan 985 induces flow across the heat exchanger and the hot refrigerant vapor exchanges heat and condenses to a liquid. A portion of this liquid refrigerant will leave the outdoor heat exchanger 980 and enter the internal heat exchanger 990. Liquid refrigerant will be subcooled in the internal heat exchanger 990 and then flow to an expansion device 910 and into the cabin evaporator 930. This air-to-refrigerant cabin evaporator 930 will be of the fin-tube or microchannel type of heat exchanger and can be single or multiple pass. A second fan (or cabin blower fan) 935 will induce a flow of either 100% outside air or a mixture of outside air and return air from the cabin across the coil of the cabin evaporator 930 where heat will be exchanged between the air and refrigerant. The refrigerant will vaporize and travel back to the internal heat exchanger 990 where it will be further superheated until it finally re-enters the compressor 950. The remaining portion of refrigerant exiting the condenser 980 will flow through expansion valve 915 and into the liquid/heat transfer fluid heat exchanger 920 wherein vehicle component heat is transferred via a heat transfer fluid loop (not shown) into the refrigerant. This vehicle heat transfer loop can then be used to manage other vehicle heat loads. The refrigerant vaporizes in heat exchanger 920 and joins the refrigerant exiting internal heat exchanger 990 at the suction of the compressor 950.

In another embodiment, in cooling mode when specific conditions exist where only vehicle cabin cooling is required, the refrigerant circuit 1000 operates as shown in FIG. 10. Starting at the compressor 1050, discharge refrigerant vapor will first flow through the cabin condenser 1040, wherein there will be no heat transfer, as in this mode, a physical bypass 1045 within the vehicle ventilation ductwork will prevent any air from flowing over the cabin condenser 1040. Vapor refrigerant will pass through the cabin condenser 1040 and flow through a valve 1075 to the outdoor heat exchanger 1080. In this mode, the outdoor heat exchanger 1080 acts as a condenser as a first fan 1085 induces flow across the heat exchanger 1080 and the hot refrigerant vapor exchanges heat and condenses to a liquid. This liquid refrigerant will leave the outdoor heat exchanger 1080 and enter the internal heat exchanger 1090. Liquid refrigerant will be subcooled in the internal heat exchanger 1090 and then flow to an expansion device 1010 and into the cabin evaporator 1030. A second fan (or cabin blower fan) 1035 will induce a flow of either 100% outside air or a mixture of outside air and return air from the cabin across the cabin evaporator 1030 where heat will be exchanged between the air and refrigerant. The refrigerant will vaporize and flow back to the internal heat exchanger 1090 where it will be further superheated until it finally returns to the compressor 1050.

The refrigerant blends have low GWP, low toxicity, and low flammability with low temperature glide for use in a hybrid, mild hybrid, plug-in hybrid, or full electric vehicles for thermal management (transferring heat from one part of the vehicle to the other) of the passenger compartment providing air conditioning (A/C) or heating to the passenger cabin. Additionally, the refrigerant blends provide improved performance under the same conditions as compared to HFO-1234yf in particular capacity higher than HFO-1234yf alone, even 20% higher or more than HFO-1234yf alone when operating under the same conditions, and COP similar or higher than HFO-1234yf alone. The COP is preferably at least 1% higher than HFO-1234yf alone, or more preferably at least 2% higher than HFO-1234yf alone, or most preferably at least 3% higher than HFO-1234yf alone when operating under the same conditions.

In another embodiment, also disclosed herein is a method for replacing HFO-1234yf in a heating and cooling system contained within an electric vehicle, comprising providing any of the foregoing compositions to said heating and cooling system as a heat transfer fluid. According to any of the foregoing embodiments, the refrigerant blend produces volumetric heating capacity at least 7% higher, or 10% higher, or 15% higher, or even 20% higher than HFO-1234yf alone when operating under the same heating conditions. In the method of replacing HFO-1234yf, the average temperature glide with the replacing composition is less than 4.0 K, preferably less than 3.0 K, or more preferably less than 2.5 K.

In one embodiment, a method of servicing the heating and cooling system of an electric vehicle is provided. The method comprising removing all of a used refrigerant from the system and charging the system with the compositions comprising a refrigerant blend consisting essentially of HFO-1234yf, HFC-32, HFC-152a and at least one hydrocarbon selected from the group consisting of propane, cyclopropane, propylene, isobutane and n-butane. The used refrigerant may be any of the foregoing compositions, or the used refrigerant may be a composition that is altered from any of the foregoing compositions due to some degree of fractionation and preferential leakage of the lower boiling components of the refrigerant blend. Due to the fractionation that may occur while operating a refrigerant with temperature glide, leakage of refrigerant may lead to a change in the composition remaining in the heating and cooling system. This change in composition makes it difficult to determine the composition remaining in the system. And therefore, if performance of the system has been deteriorating, it will be necessary to remove all the refrigerant present in the cooling and heating system and recharge the system with fresh refrigerant blend with the optimized refrigerant blend composition.

In one embodiment is provided a use of any of the foregoing compositions comprising a refrigerant blend consisting essentially of HFO-1234yf, HFC-32, HFC-152a, and at least one hydrocarbon selected from the group consisting of propane, propylene, cyclopropane, n-butane, and isobutane as a heat transfer fluid in a system for heating and cooling the passenger compartment of an electric vehicle. This use of the present inventive compositions has been described in detail in the foregoing description and will be demonstrated in the forthcoming examples.

In other embodiments, compositions intended to replace conventional high GWP refrigerant in refrigeration, air conditioning, and heat pump applications, it is desirable that the refrigerant composition exhibit a low GWP as well as similar or improved refrigerant properties compared to conventional refrigerants.

In some embodiments, the compositions as disclosed herein may be used in stationary systems, such as refrigeration, air conditioning and heat pump systems. The present inventive compositions may serve as replacements for conventional refrigerants with much higher GWP, in particular, such as R-22, R-404A, R-410A, R-407A, R-407C, or R-407F. The stationary systems may include supermarket refrigerated cases, supermarket freezer cases, chillers that provide air conditioning to large buildings, such as apartment buildings, office buildings, hospitals, and/or school buildings, residential air conditioners, residential heat pumps for heating or cooling air or for heating water or other heat transfer fluids, or residential refrigerators or freezers.

In one embodiment, disclosed herein is a stationary refrigeration, air conditioning or heat pump apparatus containing a refrigerant consisting essentially of from about 67 to 91 weight percent HFO-1234yf, from about 1 to 9 weight percent HFC-32, from about 2 to 20 weight percent HFC-152a, and from about 1 to 4 weight percent hydrocarbon selected from the group consisting of propane, propylene, cyclopropane, n-butane, and isobutane.

In another embodiment, disclosed herein is a method for replacing a first refrigerant selected from R-404A, R-507A, R-507B, R-410A, R-407A, R-407C, or R-407F comprising removing at least a portion of said first refrigerant and charging a second refrigerant consisting essentially of from about 67 to 91 weight percent HFO-1234yf, from about 1 to 9 weight percent HFC-32, from about 2 to 20 weight percent HFC-152a, and from about 1 to 4 weight percent hydrocarbon selected from the group consisting of propane, propylene, cyclopropane, n-butane, and isobutane.

In another embodiment, disclosed herein is a method for replacing a first refrigerant selected from R-513A, R-448A, R-448B, R-449A, R-452A, R-454A, R-454B, R-454C, R-466A, R-1234yf, or R-1234ze comprising removing at least a portion of said first refrigerant and charging a second refrigerant consisting essentially of from about 67 to 91 weight percent HFO-1234yf, from about 1 to 9 weight percent HFC-32, from about 2 to 20 weight percent HFC-152a, and from about 1 to 4 weight percent hydrocarbon selected from the group consisting of propane, propylene, cyclopropane, n-butane, and isobutane.

The following Examples are provided to illustrate certain aspects of the invention and shall not limit the scope of the appended claims.

### EXAMPLES

A thermodynamic modeling program was used to model the expected performance of the blends containing HFO-1234yf, HFC-32, HFC-152a, and at least one hydrocarbon as compared to HFO-1234yf alone. Fourteen different sets of conditions were modeled, the conditions being specified by the Society of Automotive Engineers (SAE) for characterization of refrigerant performance in an automobile heat pump system. Physical properties for the components were taken from NIST REFPROP Version 10.

The conditions used are as described herein below and in Table 2:

| | |
|---|---|
| Evaporator super heat = | 10 K |
| Suction line super heat = | 0 K |
| Subcooling = | 5 K |
| Compressor isentropic efficiency = | 70% |
| Compressor volumetric efficiency = | 95 % |

**TABLE 2**

| Point # | Speed | Ambient | Outlet Air | Inlet Air | Vehicle Cabin Load | Battery Load | Electric Motor and Power Electronics Load | PTC Heater Load | Mode | Evap Avg Temp | Cond Avg Temp |
|---|---|---|---|---|---|---|---|---|---|---|---|
| - | [kph] | [°C] | [°C] | [°C] | [kW] | [kW] | [kW] | [kW] | - | [°C] | [°C] |
| 1 | 0 | -40 | 55 | -5 | 5.5 | 1.5 | 0 | 0 | Heating | -15 | 65 |
| 2 | 0 | -20 | 55 | -20 | 7 | 1 | 0 | 0 | Heating | -30 | 65 |
| 3 | 0 | 35 | 8 | 35 | 7 | 0.1 | 0 | 0 | Cooling | -2 | 55 |
| 4 | 0 | 45 | 3 | 28 | 2.5 | 5 | 0 | 0 | Cooling | -7 | 48 |
| 5 | 50 | -20 | 55 | -20 | 3 | 4 | 0 | 0 | Heating | -30 | 65 |
| 6 | 50 | -20 | 55 | -20 | 7 | 0 | 0 | 0 | Heating | -30 | 65 |
| 7 | 50 | 0 | 55 | 0 | 5 | 1 | 1 | 0 | Heating | -10 | 65 |
| 8 (PTC*) | 50 | 15 | 3 | 15 | 1 | 1.5 | 0 | 1.5 | Cooling | -2 | 35 |
| 8a (PTC*) | 50 | 25 | 3 | 25 | 3.5 | 2 | 1 | 2.5 | Cooling | -2 | 45 |
| 9 | 100 | -20 | 55 | -20 | 7 | 0.5 | 1 | 0 | Heating | -30 | 65 |
| 10 | 100 | -20 | 55 | -20 | 7 | 0 | 0 | 0 | Heating | -30 | 65 |
| 11 | 100 | 0 | 55 | 0 | 5 | 0 | 2 | 0 | Heating | -10 | 65 |
| 12 | 100 | 35 | 8 | 35 | 7 | 1 | 2 | 0 | Cooling | -2 | 55 |
| 13 | 100 | 45 | 3 | 28 | 5 | 2 | 5 | 0 | Cooling | -7 | 48 |

| | | | | | | | | | | | |
|---|---|---|---|---|---|---|---|---|---|---|---|
| **PTC= positive coefficient heater* | | | | | | | | | | | |

### EXAMPLE 1

Thermodynamic Modeling Comparison for the Heat Pump Systems: HFO-1234yf/HFC-32/HFC-152a/propane relative to HFO-1234yf. The results displayed in Table 3 are the average for temperature glide, volumetric capacity, and COP for the SAE points 1-13. Capacity and COP are the percent above the corresponding value for the refrigerant blend vs. HFO-1234yf alone.

**TABLE 3**

| **Composition 1234yf/R32/R152a/ propane (wt%)** | **GWP** | **NBP (°C)** | **Average Temperature Glide (K)** | **Average Capacity Over R-1234yf** | **Average COP vs R-1234yf** |
|---|---|---|---|---|---|
| 72/7/20/1 | 75.8 | -37.8 | 2.79 | 26.1% | 3.6% |
| 73/7/19/1 | 74.4 | -37.9 | 2.82 | 26.0% | 3.4% |
| 74/7/18/1 | 73.0 | -38.0 | 2.85 | 25.9% | 3.3% |
| 75/7/17/1 | 71.6 | -38.2 | 2.88 | 25.9% | 3.1% |
| 76/7/16/1 | 70.3 | -38.3 | 2.91 | 25.8% | 3.0% |
| 77/7/15/1 | 68.9 | -38.4 | 2.95 | 25.7% | 2.8% |
| 78/7/14/1 | 67.5 | -38.5 | 2.99 | 25.6% | 2.6% |
| 73/6/20/1 | 69.0 | -37.1 | 2.54 | 23.7% | 3.6% |
| 74/6/19/1 | 67.6 | -37.2 | 2.57 | 23.6% | 3.4% |
| 75/6/18/1 | 66.3 | -37.3 | 2.59 | 23.5% | 3.3% |
| 76/6/17/1 | 64.9 | -37.4 | 2.62 | 23.4% | 3.1% |
| 77/6/16/1 | 63.5 | -37.6 | 2.66 | 23.3% | 2.9% |
| 78/6/15/1 | 62.1 | -37.7 | 2.69 | 23.2% | 2.8% |
| 79/6/14/1 | 60.8 | -37.8 | 2.72 | 23.1% | 2.6% |
| 80/6/13/1 | 59.4 | -37.9 | 2.76 | 22.9% | 2.4% |
| 81/6/12/1 | 58.0 | -38.0 | 2.80 | 22.8% | 2.3% |
| 82/6/11/1 | 56.7 | -38.2 | 2.84 | 22.6% | 2.1% |
| 83/6/10/1 | 55.3 | -38.3 | 2.88 | 22.5% | 1.9% |
| 84/6/9/1 | 53.9 | -38.4 | 2.93 | 22.3% | 1.8% |
| 85/6/8/1 | 52.6 | -38.6 | 2.97 | 22.1% | 1.6% |
| 74/5/20/1 | 62.2 | -36.3 | 2.26 | 21.3% | 3.5% |
| 75/5/19/1 | 60.9 | -36.4 | 2.29 | 21.2% | 3.4% |
| 76/5/18/1 | 59.5 | -36.5 | 2.31 | 21.0% | 3.2% |
| 77/5/17/1 | 58.1 | -36.7 | 2.34 | 20.9% | 3.1% |
| 78/5/16/1 | 56.8 | -36.8 | 2.37 | 20.8% | 2.9% |
| 79/5/15/1 | 55.4 | -36.9 | 2.40 | 20.6% | 2.7% |
| 80/5/14/1 | 54.0 | -37.0 | 2.43 | 20.5% | 2.6% |
| 81/5/13/1 | 52.6 | -37.1 | 2.47 | 20.3% | 2.4% |
| 82/5/12/1 | 51.3 | -37.2 | 2.50 | 20.2% | 2.2% |
| 83/5/11/1 | 49.9 | -37.3 | 2.54 | 20.0% | 2.1% |
| 72/6/20/2 | 69.0 | -38.5 | 2.87 | 25.9% | 3.3% |
| 73/6/19/2 | 67.7 | -38.6 | 2.89 | 25.8% | 3.1% |
| 74/6/18/2 | 66.3 | -38.8 | 2.92 | 25.7% | 3.0% |
| 75/6/17/2 | 64.9 | -38.9 | 2.94 | 25.6% | 2.8% |
| 76/6/16/2 | 63.5 | -39.0 | 2.97 | 25.5% | 2.6% |
| 77/6/15/2 | 62.2 | -39.1 | 3.00 | 25.4% | 2.5% |
| 73/5/20/2 | 62.3 | -37.8 | 2.60 | 23.5% | 3.2% |
| 74/5/19/2 | 60.9 | -37.9 | 2.62 | 23.4% | 3.1% |
| 75/5/18/2 | 59.5 | -38.0 | 2.64 | 23.2% | 2.9% |
| 76/5/17/2 | 58.2 | -38.1 | 2.67 | 23.1% | 2.8% |
| 77/5/16/2 | 56.8 | -38.2 | 2.69 | 23.0% | 2.6% |
| 78/5/15/2 | 55.4 | -38.3 | 2.72 | 22.9% | 2.4% |
| 79/5/14/2 | 54.0 | -38.4 | 2.75 | 22.7% | 2.3% |
| 80/5/13/2 | 52.7 | -38.5 | 2.78 | 22.6% | 2.1% |
| 81/5/12/2 | 51.3 | -38.6 | 2.82 | 22.4% | 2.0% |
| 82/5/11/2 | 49.9 | -38.7 | 2.85 | 22.2% | 1.8% |
| 83/5/10/2 | 48.6 | -38.9 | 2.89 | 22.0% | 1.6% |
| 84/5/9/2 | 47.2 | -39.0 | 2.92 | 21.8% | 1.4% |
| 85/5/8/2 | 45.8 | -39.1 | 2.96 | 21.6% | 1.3% |
| 86/5/7/2 | 44.5 | -39.2 | 3.00 | 21.4% | 1.1% |
| 74/4/20/2 | 55.5 | -37.0 | 2.30 | 21.0% | 3.2% |
| 75/4/19/2 | 54.1 | -37.1 | 2.32 | 20.9% | 3.0% |
| 76/4/18/2 | 52.8 | -37.2 | 2.34 | 20.8% | 2.9% |
| 77/4/17/2 | 51.4 | -37.2 | 2.36 | 20.6% | 2.7% |
| 78/4/16/2 | 50.0 | -37.3 | 2.39 | 20.5% | 2.6% |
| 79/4/15/2 | 48.7 | -37.4 | 2.41 | 20.3% | 2.4% |
| 80/4/14/2 | 47.3 | -37.5 | 2.44 | 20.1% | 2.3% |
| 81/4/13/2 | 45.9 | -37.6 | 2.46 | 19.9% | 2.1% |
| 72/5/20/3 | 62.3 | -39.1 | 2.89 | 25.6% | 3.0% |
| 73/5/19/3 | 60.9 | -39.2 | 2.91 | 25.5% | 2.8% |
| 74/5/18/3 | 59.6 | -39.3 | 2.93 | 25.4% | 2.6% |
| 75/5/17/3 | 58.2 | -39.4 | 2.95 | 25.3% | 2.5% |
| 76/5/16/3 | 56.8 | -39.5 | 2.98 | 25.2% | 2.3% |
| 77/5/15/3 | 55.4 | -39.6 | 3.00 | 25.0% | 2.2% |
| 73/4/20/3 | 55.5 | -38.3 | 2.60 | 23.2% | 2.9% |
| 74/4/19/3 | 54.2 | -38.4 | 2.62 | 23.0% | 2.8% |
| 75/4/18/3 | 52.8 | -38.5 | 2.64 | 22.9% | 2.6% |
| 76/4/17/3 | 51.4 | -38.5 | 2.66 | 22.8% | 2.5% |
| 77/4/16/3 | 50.1 | -38.6 | 2.68 | 22.6% | 2.3% |
| 78/4/15/3 | 48.7 | -38.7 | 2.70 | 22.5% | 2.1% |
| 79/4/14/3 | 47.3 | -38.8 | 2.72 | 22.3% | 2.0% |
| 80/4/13/3 | 45.9 | -38.9 | 2.75 | 22.1% | 1.8% |
| 81/4/12/3 | 44.6 | -39.0 | 2.77 | 21.9% | 1.7% |
| 82/4/11/3 | 43.2 | -39.1 | 2.80 | 21.7% | 1.5% |
| 83/4/10/3 | 41.8 | -39.2 | 2.83 | 21.5% | 1.3% |
| 84/4/9/3 | 40.5 | -39.3 | 2.86 | 21.3% | 1.1% |
| 85/4/8/3 | 39.1 | -39.4 | 2.89 | 21.1% | 1.0% |
| 86/4/7/3 | 37.7 | -39.5 | 2.92 | 20.8% | 0.8% |
| 87/4/6/3 | 36.4 | -39.6 | 2.96 | 20.6% | 0.6% |
| 88/4/5/3 | 35.0 | -39.7 | 2.99 | 20.3% | 0.4% |
| 74/3/20/3 | 48.8 | -37.4 | 2.28 | 20.7% | 2.9% |
| 75/3/19/3 | 47.4 | -37.5 | 2.30 | 20.5% | 2.7% |
| 76/3/18/3 | 46.0 | -37.6 | 2.31 | 20.4% | 2.6% |
| 77/3/17/3 | 44.7 | -37.6 | 2.33 | 20.2% | 2.4% |
| 78/3/16/3 | 43.3 | -37.7 | 2.34 | 20.0% | 2.3% |
| 72/4/20/4 | 55.6 | -39.4 | 2.87 | 25.2% | 2.7% |
| 73/4/19/4 | 54.2 | -39.5 | 2.88 | 25.1% | 2.5% |
| 74/4/18/4 | 52.8 | -39.6 | 2.90 | 25.0% | 2.4% |
| 75/4/17/4 | 51.5 | -39.7 | 2.91 | 24.9% | 2.2% |
| 76/4/16/4 | 50.1 | -39.8 | 2.93 | 24.7% | 2.0% |
| 77/4/15/4 | 48.7 | -39.8 | 2.95 | 24.6% | 1.9% |
| 78/4/14/4 | 47.3 | -39.9 | 2.97 | 24.4% | 1.7% |
| 79/4/13/4 | 46.0 | -40.0 | 3.00 | 24.2% | 1.6% |
| 73/3/20/4 | 48.8 | -38.6 | 2.56 | 22.8% | 2.6% |
| 74/3/19/4 | 47.4 | -38.6 | 2.57 | 22.6% | 2.5% |
| 75/3/18/4 | 46.1 | -38.7 | 2.58 | 22.5% | 2.3% |
| 76/3/17/4 | 44.7 | -38.8 | 2.59 | 22.3% | 2.2% |
| 77/3/16/4 | 43.3 | -38.9 | 2.61 | 22.1% | 2.0% |
| 78/3/15/4 | 42.0 | -38.9 | 2.62 | 22.0% | 1.9% |
| 79/3/14/4 | 40.6 | -39.0 | 2.64 | 21.8% | 1.7% |
| 80/3/13/4 | 39.2 | -39.1 | 2.66 | 21.6% | 1.5% |
| 81/3/12/4 | 37.8 | -39.2 | 2.68 | 21.4% | 1.4% |
| 82/3/11/4 | 36.5 | -39.2 | 2.70 | 21.1% | 1.2% |
| 83/3/10/4 | 35.1 | -39.3 | 2.72 | 20.9% | 1.0% |
| 84/3/9/4 | 33.7 | -39.4 | 2.74 | 20.7% | 0.9% |
| 85/3/8/4 | 32.4 | -39.5 | 2.76 | 20.4% | 0.7% |
| 86/3/7/4 | 31.0 | -39.5 | 2.78 | 20.2% | 0.5% |
| 74/2/20/4 | 42.0 | -37.6 | 2.21 | 20.3% | 2.6% |
| 75/2/19/4 | 40.7 | -37.7 | 2.22 | 20.1% | 2.5% |
| 76/2/18/4 | 39.3 | -37.8 | 2.23 | 19.9% | 2.3% |

The above data demonstrates that refrigerant blends containing HFO-1234yf, HFC-32, HFC-152a, and propane provide performance with low average temperature glide, being less than 3K, or even less than 2.5 K.

Blends of HFO-1234yf, HFC-32, HFC-152a, and propane are also shown to have volumetric capacity considerably higher than for HFO-1234yf. The presently claimed refrigerant blends have volumetric capacity that is at least 20% higher as compared to HFO-1234yf and COP that is equivalent or even higher than that for HFO-1234yf alone. The improved capacity of the inventive blends shows that the new fluids can easily be used to provide adequate cooling and heat to a passenger cabin.

Modeling results show that refrigerant blends containing HFO-1234yf, HFC-32, HFC-152a, and propane of the present invention provide an additional advantage over neat HFO-1234yf. The normal boiling point for HFO-1234yf is -29.4°C. At -30°C refrigerant temperatures and below, HFO-1234yf will have a compressor suction pressure that is sub-atmospheric, and the system would be operating under vacuum. In the event of a leak, air and moisture can be pulled into the system. Therefore, HFO-1234yf is limited for use as a heat pump fluid to about -20°C without an upgraded system design (i.e., a hermetic system). The refrigerant blends of the present invention do not have this issue and will function as desired down to -30°C, due to normal boiling points well below -30°C.

### EXAMPLE 2

Thermodynamic Modeling Comparison for the Heat Pump Systems: HFO-1234yf/HFC-32/HFC-152a/cyclopropane. The results displayed in Table 4 are the average for temperature glide, volumetric capacity, and COP for the SAE points 1-13. Capacity and COP are the percent above the corresponding value for the refrigerant blend vs. HFO-1234yf alone.

**TABLE 4**

| **Composition 1234yf/R32/R152a/ cyclopropane (wt%)** | **GWP** | **NBP (°C)** | **Average Temperature Glide (K)** | **Average Capacity Over R-1234yf** | **Average COP vs R-1234yf** |
|---|---|---|---|---|---|
| 71/8/20/1 | 83.3 | -37.6 | 2.83 | 28.1% | 4.0% |
| 72/8/19/1 | 82.0 | -37.7 | 2.86 | 28.0% | 3.8% |
| 73/8/18/1 | 80.6 | -37.9 | 2.90 | 28.0% | 3.7% |
| 74/8/17/1 | 79.2 | -38.0 | 2.93 | 27.9% | 3.5% |
| 75/8/16/1 | 77.9 | -38.1 | 2.97 | 27.9% | 3.4% |
| 76/8/15/1 | 76.5 | -38.3 | 3.01 | 27.8% | 3.2% |
| 72/7/20/1 | 76.6 | -36.9 | 2.60 | 25.7% | 3.9% |
| 73/7/19/1 | 75.2 | -37.1 | 2.63 | 25.6% | 3.8% |
| 78/7/14/1 | 68.4 | -37.7 | 2.81 | 25.2% | 3.0% |
| 79/7/13/1 | 67.0 | -37.8 | 2.85 | 25.1% | 2.9% |
| 80/7/12/1 | 65.6 | -38.0 | 2.89 | 25.0% | 2.7% |
| 81/7/11/1 | 64.2 | -38.1 | 2.93 | 24.9% | 2.5% |
| 82/7/10/1 | 62.9 | -38.3 | 2.98 | 24.8% | 2.3% |
| 73/6/20/1 | 69.8 | -36.2 | 2.34 | 23.3% | 3.9% |
| 89/6/4/1 | 47.9 | -38.3 | 2.99 | 21.0% | 1.3% |
| 74/5/20/1 | 63.1 | -35.4 | 2.05 | 20.9% | 3.9% |
| 81/5/13/1 | 53.5 | -36.2 | 2.26 | 20.0% | 2.8% |
| 70/8/20/2 | 84.2 | -38.3 | 2.99 | 29.9% | 4.0% |
| 71/7/20/2 | 77.4 | -37.6 | 2.75 | 27.5% | 4.0% |
| 72/7/19/2 | 76.1 | -37.7 | 2.78 | 27.5% | 3.8% |
| 73/7/18/2 | 74.7 | -37.9 | 2.81 | 27.4% | 3.7% |
| 74/7/17/2 | 73.3 | -38.0 | 2.85 | 27.4% | 3.5% |
| 75/7/16/2 | 71.9 | -38.1 | 2.88 | 27.3% | 3.4% |
| 76/7/15/2 | 70.6 | -38.3 | 2.92 | 27.2% | 3.2% |
| 78/7/13/2 | 67.8 | -38.5 | 3.00 | 27.1% | 2.9% |
| 72/6/20/2 | 70.7 | -36.9 | 2.49 | 25.1% | 4.0% |
| 85/6/7/2 | 52.9 | -38.6 | 2.98 | 23.6% | 1.9% |
| 73/5/20/2 | 63.9 | -36.1 | 2.20 | 22.7% | 3.9% |
| 90/5/3/2 | 40.6 | -38.2 | 2.83 | 19.9% | 1.1% |
| 74/4/20/2 | 57.1 | -35.2 | 1.89 | 20.2% | 3.9% |
| 76/5/18/2 | 54.4 | -35.4 | 1.93 | 20.0% | 3.6% |
| 73/7/17/3 | 74.2 | -38.6 | 2.99 | 29.2% | 3.6% |
| 71/6/20/3 | 71.5 | -37.5 | 2.63 | 26.9% | 4.0% |
| 81/6/10/3 | 57.8 | -38.8 | 2.97 | 26.0% | 2.5% |
| 72/5/20/3 | 64.8 | -36.8 | 2.34 | 24.5% | 4.0% |
| 90/5/2/3 | 40.1 | -38.9 | 3.00 | 21.6% | 1.1% |
| 73/4/20/3 | 58.0 | -35.9 | 2.02 | 22.0% | 4.0% |
| 86/4/7/3 | 40.2 | -37.3 | 2.40 | 19.9% | 1.9% |
| 70/6/20/4 | 72.4 | -38.1 | 2.76 | 28.7% | 4.0% |
| 71/6/19/4 | 71.0 | -38.3 | 2.79 | 28.7% | 3.9% |
| 72/6/18/4 | 69.6 | -38.4 | 2.82 | 28.6% | 3.8% |
| 73/6/17/4 | 68.3 | -38.5 | 2.85 | 28.6% | 3.6% |
| 74/6/16/4 | 66.9 | -38.6 | 2.88 | 28.5% | 3.5% |
| 75/6/15/4 | 65.5 | -38.7 | 2.91 | 28.4% | 3.3% |
| 76/6/14/4 | 64.1 | -38.9 | 2.94 | 28.3% | 3.2% |
| 77/6/13/4 | 62.8 | -39.0 | 2.98 | 28.2% | 3.0% |

The above data demonstrates that refrigerant blends containing HFO-1234yf, HFC-32, HFC-152a, and cyclopropane provide performance with low average temperature glide, being less than 3 K.

Blends of HFO-1234yf, HFC-32, HFC-152a, and cyclopropane are also shown to have volumetric capacity considerably higher than for HFO-1234yf. The presently claimed refrigerant blends have volumetric capacity that is at least 20% higher as compared to HFO-1234yf and COP that is equivalent or even higher than that for HFO-1234yf alone. The improved capacity of the inventive blends shows that the new fluids can easily be used to provide adequate cooling and heat to a passenger cabin.

Refrigerant blends containing HFO-1234yf, HFC-32, HFC-152a, and cyclopropane are also shown to have normal boiling points below -30°C, thus, these blends can operate as low as -30°C, or at even lower refrigerant temperatures.

### EXAMPLE 3

Thermodynamic Modeling Comparison for the Heat Pump Systems: HFO-1234yf/HFC-32/HFC-152a/propylene. The results displayed in Table 5 are the average for temperature glide, volumetric capacity, and COP for the SAE points 1-13. Capacity and COP are the percent above the corresponding value for the refrigerant blend vs. HFO-1234yf alone.

**TABLE 5**

| **Composition 1234yf/R32/R152a/ propylene (wt%)** | **GWP** | **NBP (°C)** | **Average Temperature Glide (K)** | **Average Capacity Over R-1234yf** | **Average COP vs R-1234yf** |
|---|---|---|---|---|---|
| 71/8/20/1 | 82.5 | -38.2 | 2.96 | 28.5% | 3.7% |
| 72/8/19/1 | 81.1 | -38.3 | 2.99 | 28.5% | 3.6% |
| 72/7/20/1 | 75.7 | -37.6 | 2.74 | 26.2% | 3.7% |
| 79/7/13/1 | 66.1 | -38.4 | 2.97 | 25.6% | 2.6% |
| 73/6/20/1 | 69.0 | -36.9 | 2.49 | 23.8% | 3.7% |
| 86/6/7/1 | 51.2 | -38.5 | 2.97 | 22.1% | 1.5% |
| 74/5/20/1 | 62.2 | -36.1 | 2.22 | 21.4% | 3.6% |
| 84/5/10/1 | 48.5 | -37.2 | 2.53 | 19.9% | 2.0% |
| 72/6/13/2 | 69.0 | -38.1 | 2.77 | 26.1% | 3.5% |
| 79/6/13/2 | 59.4 | -38.9 | 2.97 | 25.4% | 2.4% |
| 73/5/20/2 | 62.2 | -37.4 | 2.51 | 23.7% | 3.4% |
| 88/5/5/2 | 41.7 | -39.0 | 3.00 | 21.3% | 0.9% |
| 74/4/20/2 | 55.5 | -36.6 | 2.22 | 21.3% | 3.4% |
| 82/4/12/2 | 44.5 | -37.3 | 2.41 | 20.0% | 2.1% |
| 72/5/20/3 | 62.2 | -38.4 | 2.76 | 26.0% | 3.2% |
| 81/5/11/3 | 49.9 | -39.4 | 2.99 | 24.8% | 1.8% |
| 73/4/20/3 | 55.5 | -37.7 | 2.48 | 23.5% | 3.2% |
| 91/4/2/3 | 30.8 | -39.5 | 3.00 | 20.0% | 0.2% |
| 71/5/20/4 | 62.2 | -39.4 | 2.98 | 28.2% | 3.1% |
| 72/5/19/4 | 60.9 | -39.5 | 2.99 | 28.1% | 2.9% |

The above data demonstrates that refrigerant blends containing HFO-1234yf, HFC-32, HFC-152a, and propylene provide performance with low average temperature glide, being less than 3 K, or even less than 2.5 K.

Blends of HFO-1234yf, HFC-32, HFC-152a, and propylene are also shown to have volumetric capacity considerably higher than for HFO-1234yf. The presently claimed refrigerant blends have volumetric capacity that is at least 20% higher as compared to HFO-1234yf and COP that is equivalent or even higher than that for HFO-1234yf alone. The improved capacity of the inventive blends shows that the new fluids can easily be used to provide adequate cooling and heat to a passenger cabin.

Refrigerant blends containing HFO-1234yf, HFC-32, HFC-152a, and propylene are also shown to have normal boiling points below -30°C, thus, these blends can operate as low as -30°C, or at even lower refrigerant temperatures.

### EXAMPLE 4

Thermodynamic Modeling Comparison for the Heat Pump Systems: HFO-1234yf/HFC-32/HFC-152a/isobutane. The results displayed in Table 6 are the average for temperature glide, volumetric capacity, and COP for the SAE points 1-13. Capacity and COP are the percent above the corresponding value for the refrigerant blend vs. HFO-1234yf alone.

**TABLE 6**

| **Composition 1234yf/R32/R152a/ isobutane (wt%)** | **GWP** | **NBP (°C)** | **Average temperature Glide (K)** | **Average Capacity Over R-1234yf** | **Average COP vs R-1234yf** |
|---|---|---|---|---|---|
| 70/9/20/1 | 89.3 | -37.7 | 2.90 | 28.8% | 3.9% |
| 71/9/19/1 | 87.9 | -37.8 | 2.93 | 28.8% | 3.7% |
| 72/9/18/1 | 86.5 | -38.0 | 2.97 | 28.7% | 3.6% |
| 73/9/17/1 | 85.2 | -38.1 | 3.00 | 28.7% | 3.4% |
| 71/8/20/1 | 82.5 | -37.1 | 2.69 | 26.4% | 3.8% |
| 79/8/12/1 | 71.6 | -38.2 | 3.00 | 25.9% | 2.6% |
| 72/7/20/1 | 75.8 | -36.4 | 2.45 | 24.1% | 3.8% |
| 85/7/7/1 | 58.0 | -38.2 | 2.99 | 22.6% | 1.7% |
| 73/6/20/1 | 69.0 | -35.7 | 2.20 | 21.7% | 3.8% |
| 85/6/8/1 | 52.6 | -37.2 | 2.65 | 20.1% | 1.8% |
| 69/9/20/2 | 89.3 | -37.9 | 2.92 | 29.0% | 3.8% |
| 71/9/18/2 | 86.6 | -38.2 | 2.99 | 29.0% | 3.5% |
| 70/8/20/2 | 82.6 | -37.3 | 2.70 | 26.7% | 3.7% |
| 77/8/13/2 | 73.0 | -38.2 | 2.97 | 26.2% | 2.6% |
| 71/7/20/2 | 75.8 | -36.6 | 2.47 | 24.3% | 3.7% |
| 83/7/8/2 | 59.4 | -38.2 | 2.95 | 22.9% | 1.7% |
| 72/6/20/2 | 69.0 | -35.9 | 2.21 | 21.9% | 3.7% |
| 85/6/7/2 | 51.2 | -37.5 | 2.71 | 20.1% | 1.5% |
| 68/9/20/3 | 89.4 | -38.1 | 2.93 | 29.2% | 3.7% |
| 70/9/18/3 | 86.6 | -38.3 | 3.00 | 29.1% | 3.4% |
| 69/8/20/3 | 82.6 | -37.5 | 2.72 | 26.8% | 3.7% |
| 76/8/20/3 | 73.0 | -38.4 | 2.98 | 26.4% | 2.6% |
| 70/7/20/3 | 75.8 | -36.8 | 2.48 | 24.5% | 3.6% |
| 82/7/8/3 | 59.4 | -38.4 | 2.97 | 23.1% | 1.7% |
| 71/6/20/3 | 69.1 | -36.1 | 2.22 | 22.1% | 3.6% |
| 85/6/6/3 | 49.9 | -37.8 | 2.77 | 20.0% | 1.3% |
| 67/9/20/4 | 89.4 | -38.2 | 2.95 | 29.3% | 3.6% |
| 68/9/19/4 | 88.0 | -38.4 | 2.98 | 29.3% | 3.5% |
| 68/8/20/4 | 82.6 | -37.6 | 2.74 | 27.0% | 3.6% |
| 75/8/13/4 | 73.1 | -38.5 | 3.00 | 26.5% | 2.5% |
| 81/7/8/4 | 59.4 | -38.5 | 2.98 | 23.3% | 1.6% |
| 70/6/20/4 | 69.1 | -36.2 | 2.24 | 22.3% | 3.5% |
| 85/6/5/4 | 48.6 | -38.1 | 2.83 | 20.0% | 1.1% |
| 71/5/20/4 | 62.4 | -35.4 | 1.95 | 19.9% | 3.5% |

The above data demonstrates that refrigerant blends containing HFO-1234yf, HFC-32, HFC-152a, and isobutane provide performance with low average temperature glide, being less than 3 K, or even less than 2.5 K.

Blends of HFO-1234yf, HFC-32, HFC-152a, and isobutane are also shown to have volumetric capacity considerably higher than for HFO-1234yf. The presently claimed refrigerant blends have volumetric capacity that is at least 20% higher as compared to HFO-1234yf and COP that is equivalent or even higher than that for HFO-1234yf alone. The improved capacity of the inventive blends shows that the new fluids can easily be used to provide adequate cooling and heat to a passenger cabin.

Refrigerant blends containing HFO-1234yf, HFC-32, HFC-152a, and isobutane are also shown to have normal boiling points below -30°C, thus, these blends can operate as low as -30°C, or at even lower refrigerant temperatures.

### EXAMPLE 5

Thermodynamic Modeling Comparison for the Heat Pump Systems: HFO-1234yf/HFC-32/HFC-152a/n-butane. The results displayed in Table 7 are the average for temperature glide, volumetric capacity, and COP for the SAE points 1-13. Capacity and COP are the percent above the corresponding value for the refrigerant blend vs. HFO-1234yf alone.

**TABLE 7**

| **Composition 1234yf/R32/R152a/ n-butane (wt%)** | **GWP** | **NBP (°C)** | **Average Temperature Glide (K)** | **Average Capacity Over R-1234yf** | **Average COP vs R-1234yf** |
|---|---|---|---|---|---|
| 70/9/20/1 | 89.3 | -37.5 | 2.89 | 28.4% | 4.0% |
| 73/9/17/1 | 85.2 | -37.9 | 3.00 | 28.3% | 3.5% |
| 71/8/20/1 | 82.5 | -36.9 | 2.68 | 26.1% | 3.9% |
| 79/8/20/1 | 71.6 | -38.0 | 2.99 | 25.5% | 2.7% |
| 72/7/20/1 | 75.8 | -36.2 | 2.44 | 23.7% | 3.9% |
| 85/7/7/1 | 58.0 | -38.0 | 2.99 | 22.2% | 1.8% |
| 73/6/20/1 | 69.0 | -35.5 | 2.18 | 21.4% | 3.9% |
| 83/6/10/1 | 55.3 | -36.7 | 2.55 | 20.0% | 2.3% |
| 69/9/20/2 | 89.3 | -37.5 | 2.91 | 28.3% | 4.0% |
| 71/9/18/2 | 86.6 | -37.8 | 2.98 | 28.2% | 3.7% |
| 70/8/20/2 | 82.6 | -36.9 | 2.69 | 25.9% | 3.9% |
| 77/8/13/2 | 73.0 | -37.8 | 2.97 | 25.4% | 2.9% |
| 71/7/20/2 | 75.8 | -36.3 | 2.46 | 23.6% | 3.9% |
| 83/7/8/2 | 59.4 | -37.8 | 2.96 | 22.1% | 2.0% |
| 72/6/20/2 | 69.0 | -35.5 | 2.20 | 21.2% | 3.9% |
| 81/6/11/2 | 56.7 | -36.6 | 2.53 | 20.0% | 2.5% |
| 68/9/20/3 | 89.4 | -37.5 | 2.93 | 28.1% | 4.0% |
| 69/8/19/3 | 88.0 | -37.7 | 2.97 | 28.0% | 3.9% |
| 69/8/20/3 | 82.6 | -36.9 | 2.72 | 25.7% | 4.0% |
| 76/8/13/3 | 73.0 | -37.8 | 3.00 | 25.2% | 2.9% |
| 70/7/20/3 | 75.8 | -36.3 | 2.48 | 23.4% | 3.9% |
| 82/7/8/3 | 59.4 | -37.8 | 3.00 | 21.9% | 2.0% |
| 71/6/20/3 | 69.1 | -35.5 | 2.22 | 21.0% | 3.9% |
| 79/6/12/3 | 58.1 | -36.5 | 2.51 | 20.0% | 2.7% |
| 67/9/20/4 | 89.4 | -37.5 | 2.97 | 27.8% | 4.0% |
| 68/8/20/4 | 82.6 | -36.9 | 2.75 | 25.5% | 4.0% |
| 74/8/14/4 | 74.4 | -37.7 | 3.00 | 25.0% | 3.1% |
| 69/7/20/4 | 75.9 | -36.3 | 2.51 | 23.2% | 4.0% |
| 80/7/9/4 | 60.8 | -37.7 | 3.00 | 21.7% | 2.3% |
| 70/6/20/4 | 69.1 | -35.5 | 2.25 | 20.8% | 3.9% |
| 76/6/14/4 | 60.9 | -36.2 | 2.47 | 20.0% | 3.0% |

The above data demonstrates that refrigerant blends containing HFO-1234yf, HFC-32, HFC-152a, and n-butane provide performance with low average temperature glide, being less than 3 K, or even less than 2.5 K.

Blends of HFO-1234yf, HFC-32, HFC-152a, and n-butane are also shown to have volumetric capacity considerably higher than for HFO-1234yf. The presently claimed refrigerant blends have volumetric capacity that is at least 20% higher as compared to HFO-1234yf and COP that is equivalent or even higher than that for HFO-1234yf alone. The improved capacity of the inventive blends shows that the new fluids can easily be used to provide adequate cooling and heat to a passenger cabin.

Refrigerant blends containing HFO-1234yf, HFC-32, HFC-152a, and n-butane are also shown to have normal boiling points below -30°C, thus, these blends can operate as low as -30°C, or at even lower refrigerant temperatures.

While the invention has been described with reference to a preferred embodiment, it will be understood by those skilled in the art that various changes may be made, and equivalents may be substituted for elements thereof without departing from the scope of the appended claims. In addition, many modifications may be made to adapt a particular situation or material to the teachings of the invention without departing from the essential scope of the claims. Therefore, it is intended that the invention not be limited to the particular embodiment disclosed as the best mode contemplated for carrying out this invention, but that the invention will include all embodiments falling within the scope of the appended claims.

## Claims

1. A composition comprising a refrigerant blend comprising HFO-1234yf, HFC-32, HFC-152a, and at least one hydrocarbon selected from the group consisting of propane, propylene, cyclopropane, n-butane, and isobutane.

2. The composition of claim 1, wherein:
said refrigerant blend consists essentially of from about 67 to 91 weight percent HFO-1234yf, from about 1 to 9 weight percent HFC-32, from about 2 to 20 weight percent HFC-152a, and from about 1 to 4 weight percent hydrocarbon selected from the group consisting of propane, propylene, cyclopropane, n-butane, and isobutane;
said refrigerant blend consists essentially of from about 72 to 88 weight percent HFO-1234yf, from about 2 to 7 weight percent HFC-32, from about 5 to 20 weight percent HFC-152a, and from about 1 to 4 weight percent propane;
said refrigerant consists essentially of from about 70 to 90 weight percent HFO-1234yf, from about 4 to 8 weight percent HFC-32, from about 2 to 20 weight percent HFC-152a, and from about 1 to 4 weight percent cyclopropane;
said refrigerant consists essentially of from about 70 to 91 weight percent HFO-1234yf, from about 4 to 8 weight percent HFC-32, from about 2 to 20 weight percent HFC-152a, and from about 1 to 4 weight percent propylene;
said refrigerant consists essentially of from about 67 to 85 weight percent HFO-1234yf, from about 5 to 9 weight percent HFC-32, from about 5 to 20 weight percent HFC-152a, and from about 1 to 4 weight percent isobutane; or
said refrigerant consists essentially of from about 67 to 85 weight percent HFO-1234yf, from about 6 to 9 weight percent HFC-32, from about 7 to 20 weight percent HFC-152a, and from about 1 to 4 weight percent n-butane.

3. The composition of any of claims 1 to 2, further comprising at least one additional compound:
a) comprising at least one compound selected from the group consisting of HCFC-244bb, HFC-245cb, HFC-254eb, CFC-12, HCFC-124, 3,3,3-trifluoropropyne, HCC-1140, HFC-1225ye, HFO-1225zc, HFC-134a, HFO-1243zf, and HCFO-1131; or
b) comprising at least one compound selected from the group consisting of: HFC-23, HCFC-31, HFC-41, HFC-143a, HCFC-22, HCC-40, HFC-161, HFO-1141, HCO-1140, HCFC-151a, HCC-150a, HCC-160, HCFO-1130a, HCFC-141b, HFC-143a, HCFO-1122, and HCFC-142b; or
c) combinations of a) and b);
wherein the total amount of additional compound comprises greater than 0 and less than 1 weight percent.

4. The composition of any of claims 1 to 3, wherein the refrigerant has a burning velocity of 10 cm/s or less, when measured in accordance with ISO 817 vertical tube method.

5. The composition of any of claims 1 to 4, wherein the refrigerant is classified as 2L for flammability as defined in ANSI/ASHRAE Standard 34.

6. The composition of any of claims 1 to 5, further comprising a lubricant wherein said lubricant is at least one selected from the group consisting of polyalkylene glycol, polyol ester, poly-α-olefin, and polyvinyl ether.

7. The composition of any of claims 1 to 6, further comprising a stabilizer, wherein the stabilizer is selected from the group consisting of nitromethane, ascorbic acid, terephthalic acid, azoles, phenolic compounds, cyclic monoterpenes, terpenes, phosphites, phosphates, phosphonates, thiols, and lactones.

8. The composition of any of claims 1 to 7, further comprising at least one tracer, wherein said at least one tracer is selected from the group consisting of hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof.

9. A refrigerant storage container containing the refrigerant of any of claims 1 to 8, wherein the refrigerant comprises gaseous and liquid phases.

10. A system for heating and cooling the passenger compartment of an electric vehicle, comprising an evaporator, compressor, condenser and expansion device, each operably connected to perform a vapor compression cycle, wherein the system contains the composition of any of claims 1 to 8.

11. A method for replacing HFO-1234yf in a heating and cooling system contained within an electric vehicle, comprising providing the composition of any of claims 1 to 8 as a heat transfer fluid.

12. The method of claim 11, wherein the refrigerant produces volumetric heating capacity at least 20 % higher than HFO-1234yf alone when operating under the same conditions.

13. The method of claim 11 or 12, wherein the refrigerant produces COP equal to or greater than the COP of HFO-1234yf alone when operating under the same conditions.

14. A method of servicing the heating and cooling system of an electric vehicle comprising removing all of a used refrigerant from the system and charging the system with the composition of any of claims 1 to 8.

15. Use of the composition of any of claims 1 to 8 as a heat transfer fluid in a system for heating and cooling the passenger compartment of an electric vehicle.

## Patentansprüche

1. Zusammensetzung, umfassend ein Kältemittelgemisch, umfassend HFO-1234yf, HFC-32, HFC-152a und mindestens einen Kohlenwasserstoff ausgewählt aus der Gruppe bestehend aus Propan, Propylen, Cyclopropan, n-Butan und Isobutan.

2. Zusammensetzung nach Anspruch 1, wobei:
das Kältemittelgemisch im Wesentlichen aus etwa 67 bis 91 Gewichtsprozent HFO-1234yf, aus etwa 1 bis 9 Gewichtsprozent HFC-32, aus etwa 2 bis 20 Gewichtsprozent HFC-152a und aus etwa 1 bis 4 Gewichtsprozent Kohlenwasserstoff ausgewählt aus der Gruppe bestehend aus Propan, Propylen, Cyclopropan, n-Butan und Isobutan besteht;
das Kältemittelgemisch im Wesentlichen aus etwa 72 bis 88 Gewichtsprozent HFO-1234yf, aus etwa 2 bis 7 Gewichtsprozent HFC-32, aus etwa 5 bis 20 Gewichtsprozent HFC-152a und aus etwa 1 bis 4 Gewichtsprozent Propan besteht;
das Kältemittel im Wesentlichen aus etwa 70 bis 90 Gewichtsprozent HFO-1234yf, aus etwa 4 bis 8 Gewichtsprozent HFC-32, aus etwa 2 bis 20 Gewichtsprozent HFC-152a und aus etwa 1 bis 4 Gewichtsprozent Cyclopropan besteht;
das Kältemittel im Wesentlichen aus etwa 70 bis 91 Gewichtsprozent HFO-1234yf, aus etwa 4 bis 8 Gewichtsprozent HFC-32, aus etwa 2 bis 20 Gewichtsprozent HFC-152a und aus etwa 1 bis 4 Gewichtsprozent Propylen besteht;
das Kältemittel im Wesentlichen aus etwa 67 bis 85 Gewichtsprozent HFO-1234yf, aus etwa 5 bis 9 Gewichtsprozent HFC-32, aus etwa 5 bis 20 Gewichtsprozent HFC-152a und aus etwa 1 bis 4 Gewichtsprozent Isobutan besteht; oder
das Kältemittel im Wesentlichen aus etwa 67 bis 85 Gewichtsprozent HFO-1234yf, aus etwa 6 bis 9 Gewichtsprozent HFC-32, aus etwa 7 bis 20 Gewichtsprozent HFC-152a und aus etwa 1 bis 4 Gewichtsprozent n-Butan besteht.

3. Zusammensetzung nach einem der Ansprüche 1 bis 2, weiter umfassend mindestens eine zusätzliche Verbindung:
a) umfassend mindestens eine Verbindung ausgewählt aus der Gruppe bestehend aus HCFC-244bb, HFC-245cb, HFC-254eb, CFC-12, HCFC-124, 3,3,3-Trifluorpropin, HCC-1140, HFC-1225ye, HFO-1225zc, HFC-134a, HFO-1243zf und HCFO-1131; oder
b) umfassend mindestens eine Verbindung ausgewählt aus der Gruppe bestehend aus: HFC-23, HCFC-31, HFC-41, HFC-143a, HCFC-22, HCC-40, HFC-161, HFO-1141, HCO-1140, HCFC-151a, HCC-150a, HCC-160, HCFO-1130a, HCFC-141b, HFC-143a, HCFO-1122 und HCFC-142b; oder
c) Kombinationen von a) und b);
wobei die Gesamtmenge der zusätzlichen Verbindung mehr als 0 und weniger als 1 Gewichtsprozent umfasst.

4. Zusammensetzung nach einem der Ansprüche 1 bis 3, wobei das Kältemittel eine Brenngeschwindigkeit von 10 cm/s oder weniger aufweist, wenn gemäß dem ISO 817 Vertikalrohrverfahren gemessen.

5. Zusammensetzung nach einem der Ansprüche 1 bis 4, wobei das Kältemittel als 2L für Entflammbarkeit eingestuft ist, wie in ANSI/ASHRAE-Standard 34 definiert.

6. Zusammensetzung nach einem der Ansprüche 1 bis 5, weiter umfassend ein Schmiermittel, wobei das Schmiermittel mindestens eins ist, ausgewählt aus der Gruppe bestehend aus Polyalkylenglykol, Polyolester, Poly-α-olefin und Polyvinylether.

7. Zusammensetzung nach einem der Ansprüche 1 bis 6, weiter umfassend einen Stabilisator, wobei der Stabilisator aus der Gruppe ausgewählt ist, bestehend aus Nitromethan, Ascorbinsäure, Terephthalsäure, Azolen, Phenolverbindungen, cyclischen Monoterpenen, Terpenen, Phosphiten, Phosphaten, Phosphonaten, Thiolen und Lactonen.

8. Zusammensetzung nach einem der Ansprüche 1 bis 7, weiter umfassend mindestens einen Tracer, wobei der mindestens eine Tracer aus der Gruppe ausgewählt ist, bestehend aus Hydrofluorkohlenstoffen, Hydrofluorolefinen, Hydrochlorkohlenstoffen, Hydrochlorolefinen, Hydrochlorfluorkohlenstoffen, Hydrochlorfluorolefinen, Hydrochlorkohlenstoffen, Hydrochlorolefinen, Chlorfluorkohlenstoffen, Chlorfluorolefinen, Kohlenwasserstoffen, Perfluorkohlenstoffen, Perfluorolefinen und Kombinationen davon.

9. Kältemittellagerungsbehälter, der das Kältemittel nach einem der Ansprüche 1 bis 8 enthält, wobei das Kältemittel gasförmige und flüssige Phasen umfasst.

10. System zum Erwärmen und Kühlen des Fahrgastraums eines Elektrofahrzeugs, umfassend einen Verdampfer, einen Kompressor, einen Kondensator und eine Expansionsvorrichtung, die jeweils funktionsfähig verbunden sind, um einen Dampfkompressionszyklus durchzuführen, wobei das System die Zusammensetzung nach einem der Ansprüche 1 bis 8 enthält.

11. Verfahren zum Ersetzen von HFO-1234yf in einem Erwärmungs- und Kühlsystem, das innerhalb eines Elektrofahrzeugs enthalten ist, umfassend Bereitstellen der Zusammensetzung nach einem der Ansprüche 1 bis 8 als ein Wärmeträgerfluid.

12. Verfahren nach Anspruch 11, wobei das Kältemittel eine volumetrische Erwärmungskapazität produziert, die mindestens 20 % höher ist als HFO-1234yf allein, wenn unter den gleichen Bedingungen gearbeitet wird.

13. Verfahren nach Anspruch 11 oder 12, wobei das Kältemittel einen COP produziert, der gleich oder größer ist als der COP von HFO-1234yf allein, wenn unter den gleichen Bedingungen gearbeitet wird.

14. Verfahren zum Warten des Erwärmungs- und Kühlsystems eines Elektrofahrzeugs, umfassend Entfernen der Gesamtheit eines verbrauchten Kältemittels aus dem System und Beschicken des Systems mit der Zusammensetzung nach einem der Ansprüche 1 bis 8.

15. Verwendung der Zusammensetzung nach einem der Ansprüche 1 bis 8 als ein Wärmeträgerfluid in einem System zum Erwärmen und Kühlen des Fahrgastraums eines Elektrofahrzeugs.

## Revendications

1. Composition comprenant un mélange de réfrigérants comprenant le HFO-1234yf, le HFC-32, le HFC-152a et au moins un hydrocarbure choisi dans le groupe constitué par le propane, le propylène, le cyclopropane, le n-butane et l'isobutane.

2. Composition selon la revendication 1, dans laquelle :
ledit mélange de réfrigérants est essentiellement composé d'environ 67 à 91 pour cent en poids de HFO-1234yf, d'environ 1 à 9 pour cent en poids de HFC-32, d'environ 2 à 20 pour cent en poids de HFC-152a et d'environ 1 à 4 pour cent en poids d'hydrocarbure choisi parmi le groupe constitué par le propane, le propylène, le cyclopropane, le n-butane et l'isobutane ;
ledit mélange de réfrigérants est essentiellement composé d'environ 72 à 88 pour cent en poids de HFO-1234yf, d'environ 2 à 7 pour cent en poids de HFC-32, d'environ 5 à 20 pour cent en poids de HFC-152a et d'environ 1 à 4 pour cent en poids de propane ;
ledit réfrigérant est essentiellement composé d'environ 70 à 90 pour cent en poids de HFO-1234yf, d'environ 4 à 8 pour cent en poids de HFC-32, d'environ 2 à 20 pour cent en poids de HFC-152a et d'environ 1 à 4 pour cent en poids de cyclopropane ;
ledit réfrigérant est essentiellement composé d'environ 70 à 91 pour cent en poids de HFO-1234yf, d'environ 4 à 8 pour cent en poids de HFC-32, d'environ 2 à 20 pour cent en poids de HFC-152a et d'environ 1 à 4 pour cent en poids de propylène ;
ledit réfrigérant est essentiellement composé d'environ 67 à 85 pour cent en poids de HFO-1234yf, d'environ 5 à 9 pour cent en poids de HFC-32, d'environ 5 à 20 pour cent en poids de HFC-152a et d'environ 1 à 4 pour cent en poids d'isobutane ; ou
ledit réfrigérant est essentiellement composé d'environ 67 à 85 pour cent en poids de HFO-1234yf, d'environ 6 à 9 pour cent en poids de HFC-32, d'environ 7 à 20 pour cent en poids de HFC-152a et d'environ 1 à 4 pour cent en poids de n-butane.

3. Composition selon l'une quelconque des revendications 1 à 2, comprenant en outre au moins un composé supplémentaire :
a) comprenant au moins un composé choisi parmi le groupe constitué par HCFC-244bb, HFC-245cb, HFC-254eb, CFC-12, HCFC-124, 3,3,3-trifluoropropyne, HCC-1140, HFC-1225ye, HFO-1225zc, HFC-134a, HFO-1243zf et HCFO-1131 ; ou
b) comprenant au moins un composé choisi parmi le groupe constitué par : HFC-23, HCFC-31, HFC-41, HFC-143a, HCFC-22, HCC-40, HFC-161, HFO-1141, HCO-1140, HCFC-151a, HCC-150a, HCC-160, HCFO-1130a, HCFC-141b, HFC-143a, HCFO-1122 et HCFC-142b ; ou
c) des combinaisons de a) et b) ;
dans laquelle la quantité totale de composé supplémentaire comprend plus de 0 et moins de 1 pour cent en poids.

4. Composition selon l'une quelconque des revendications 1 à 3, dans laquelle le réfrigérant présente une vitesse de combustion de 10 cm/s ou moins, lorsqu'elle est mesurée conformément au procédé du tube vertical ISO 817.

5. Composition selon l'une quelconque des revendications 1 à 4, dans laquelle le réfrigérant est classé 2L pour son inflammabilité telle que définie dans la norme ANSI/ASHRAE Standard 34.

6. Composition selon l'une quelconque des revendications 1 à 5, comprenant en outre un lubrifiant, dans laquelle ledit lubrifiant est au moins un élément choisi dans le groupe constitué par le polyalkylène glycol, l'ester de polyol, la poly-α-oléfine, et l'éther polyvinylique.

7. Composition selon l'une quelconque des revendications 1 à 6, comprenant en outre un stabilisant, dans laquelle le stabilisant est choisi dans le groupe constitué par le nitrométhane, l'acide ascorbique, l'acide téréphtalique, les azoles, les composés phénoliques, les monoterpènes cycliques, les terpènes, les phosphites, les phosphates, les phosphonates, les thiols et les lactones.

8. Composition selon l'une quelconque des revendications 1 à 7, comprenant en outre au moins un traceur, dans laquelle ledit au moins un traceur est choisi parmi le groupe constitué par les hydrofluorocarbures, les hydrofluorooléfines, les hydrochlorocarbures, les hydrochlorooléfines, les hydrochlorofluorocarbures, les hydrochlorofluorooléfines, les hydrochlorocarbures, les hydrochlorooléfines, les chlorofluorocarbures, les chlorofluorooléfines, les hydrocarbures, les perfluorocarbures, les perfluorooléfines et des combinaisons de ceux-ci.

9. Récipient de stockage de réfrigérant contenant le réfrigérant selon l'une quelconque des revendications 1 à 8, dans lequel le réfrigérant comprend des phases gazeuses et liquides.

10. Système de chauffage et de refroidissement de l'habitacle d'un véhicule électrique, comprenant un évaporateur, un compresseur, un condenseur et un dispositif de détente, chacun étant relié de manière fonctionnelle pour effectuer un cycle de compression de vapeur, dans lequel le système contient la composition selon l'une quelconque des revendications 1 à 8.

11. Procédé de remplacement du HFO-1234yf dans un système de chauffage et de refroidissement contenu dans un véhicule électrique, comprenant la fourniture de la composition selon l'une quelconque des revendications 1 à 8 en tant que fluide caloporteur.

12. Procédé selon la revendication 11, dans lequel le réfrigérant produit une capacité de chauffage volumétrique d'au moins 20 % supérieure au HFO-1234yf seul dans les mêmes conditions de fonctionnement.

13. Procédé selon la revendication 11 ou 12, dans lequel le réfrigérant produit un COP égal ou supérieur au COP du HFO-1234yf seul lorsqu'il fonctionne dans les mêmes conditions.

14. Procédé d'entretien du système de chauffage et de refroidissement d'un véhicule électrique comprenant le retrait de tout réfrigérant usagé du système et le chargement du système avec la composition selon l'une quelconque des revendications 1 à 8.

15. Utilisation de la composition selon l'une quelconque des revendications 1 à 8 comme fluide caloporteur dans un système de chauffage et de refroidissement de l'habitacle d'un véhicule électrique.
